# EUROPEAN PATENT APPLICATION

(11) **EP 4 722 691 A1**
(43) Date of publication of application: **08.04.2026**
(21) Application number: 24814502.1
(22) Date of filing: 29.05.2024
(51) Int. Cl.: G01N 21/3504

(54) **GAS SENSOR**

(30) Priority: 29.05.2023 CN 202310617909; 31.05.2023 CN 202310639194; 31.05.2023 CN 202310640326; 20.06.2023 CN 202310733468; 20.06.2023 CN 202310738548
(71) Applicant: Hangzhou Leaderway Electronics Co., Ltd, Hangzhou, Zhejiang 310018 (CN)
(72) Inventor: FENG, Yujie, Hangzhou, Zhejiang 310018 (CN); LIN, Chenglin, Hangzhou, Zhejiang 310018 (CN)
(74) Representative: Maikowski & Ninnemann Patentanwälte Partnerschaft mbB
(86) International application number: PCT/CN2024/096158
(87) International publication number: WO 2024/245305

(57) **Abstract**

A detection device, comprising a detection shell, a light source module, a detection probe and a first circuit board, wherein the detection shell has an optical gas chamber; the detection shell comprises a reflective surface, the reflective surface being located on the periphery of the optical gas chamber; the detection shell has a plurality of first vent holes, the first vent holes being in gas communication with the outside of the detection device, and the first vent holes being in gas communication with the optical gas chamber; the light source module is at least partially located in the detection shell, the light source module being electrically and physically connected to the first circuit board, and the detection shell and the first circuit board being distributed in the direction of height of the detection device; and the detection probe is at least partially located in the detection shell, the detection shell having a direction of length, and the detection probe and the light source module being located on two opposite sides of the detection shell in the direction of length. In the detection device of the present application, the light source module is electrically and physically connected to the first circuit board, that is, the light source module is directly connected to the first circuit board, such that the detection device has a simpler structure.

## Description

The present application claims the application of priorities to the following five Chinese patent applications, all of which are incorporated herein by reference,
1. Chinese Patent Application No. 202310640326.X, titled "DETECTION DEVICE", filed with the China National Intellectual Property Administration on May 31, 2023;
2. Chinese Patent Application No. 202310639194.9, titled "DETECTION DEVICE", filed with the China National Intellectual Property Administration on May 31, 2023;
3. Chinese Patent Application No. 202310733468.0, titled "DETECTION DEVICE", filed with the China National Intellectual Property Administration on June 20, 2023;
4. Chinese Patent Application No. 202310738548.5, titled "DETECTION DEVICE", filed with the China National Intellectual Property Administration on June 20, 2023; and
5. Chinese Patent Application No. 202310617909.0, titled "GAS DETECTION DEVICE", filed with the China National Intellectual Property Administration on May 29, 2023.

### FIELD

The present application relates to the technical field of detection, in particular to a gas sensor.

### BACKGROUND

A gas sensor includes a light source module, a detection probe, a detection shell, a first circuit board, and two second circuit boards. The principle of the gas sensor is primarily based on the fact that different gases have varying absorption rates for infrared light. The detector can calculate a concentration of a target gas and obtain other information by detecting different light intensities. In cylindrical gas sensors, two second circuit boards are provided to fix the light source module and the detection probe, respectively, and these two second circuit boards are then connected to both ends of the detection shell. The light source is at least partially located inside the detection shell and the detection probe is at least partially located inside the detection shell, which forms an optical gas chamber module. The two second circuit boards are further electrically connected to the first circuit board, which are assembled together to form a sensor module and further assembled into a detection device. The gas sensor needs to have a certain resistance for external forces during transportation or use, especially requiring a strong connection strength among the components of the gas sensor. In the related arts, the connection strength among various components of the gas sensor cannot meet the requirements.

### SUMMARY

In order to address the issues above, a gas sensor is provided in the present application, and components of the gas sensor are connected firmly.

According to a first aspect of the present application, a gas sensor is provided, which has a detection device. The detection device includes a detection shell, a light source module, a detection probe, and a first circuit board. The detection shell defines an optical gas chamber.

The detection shell includes a reflective surface, which is located on a periphery of the optical gas chamber. The detection shell defines first vent holes, which are in gaseous communication with an outside of the detection device, and the first vent holes are in gaseous communication with the optical gas chamber.

The light source module is at least partially located in the detection shell, at least one of the light source module and the detection probe is directly and electrically connected to the first circuit board, and the detection shell and the first circuit board are arranged in a height direction of the detection device.

The detection probe is at least partially located inside the detection shell. The detection shell has a length direction, and the detection probe and the light source module are located on two opposite sides of the detection shell, respectively.

In the present application, at least one of the light source module and the detection probe is electrically and directly connected to the first circuit board, which simplifies the connection between at least one of the light source module and the detection and the first circuit board in comparison with the related arts and thus improve the connection strength between at least one of the light source module and the detection and the first circuit board.

According to the second aspect of the present application, a gas sensor is provided. The gas sensor includes a detection shell, a light source module, a detection probe, and a circuit board. At least one of the light source module and the detection probe is electrically connected to the circuit board. The gas sensor defines an optical gas chamber, and the optical gas chamber is in gaseous communication with an outside of the gas senor. The detection shell, the light source module, and the detection probe are all located on a periphery of the optical gas chamber, and the detection probe and the light source module are located on two opposite sides in a length direction of the detection shell.

The detection shell includes an inner surface, an outer surface, and a positioning portion. The outer surface is arranged far from the optical gas chamber relative to the inner surface, and the positioning portion protrudes from the outer surface in a direction away from the optical gas chamber.

The circuit board defines a first positioning hole, the positioning portion is at least partially located in the first positioning hole, and the first positioning portion is connected to a hole wall corresponding to the first positioning hole in a fixed or position-limited manner.

In the present application, the detection shell is connected to the circuit board through the positioning portion, which can improve the connection strength between the detection shell and the circuit board.

### BRIEF DESCRIPTION OF THE DRAWINGS

For more clearly illustrating embodiments of the present application or the technical solutions in the conventional technology, drawings to be used in the description of the embodiments or the conventional technology will be briefly described hereinafter. Apparently, the drawings in the following description are only some embodiments of the present application. For those skilled in the art, other drawings may be obtained based on the provided drawings without any creative work.

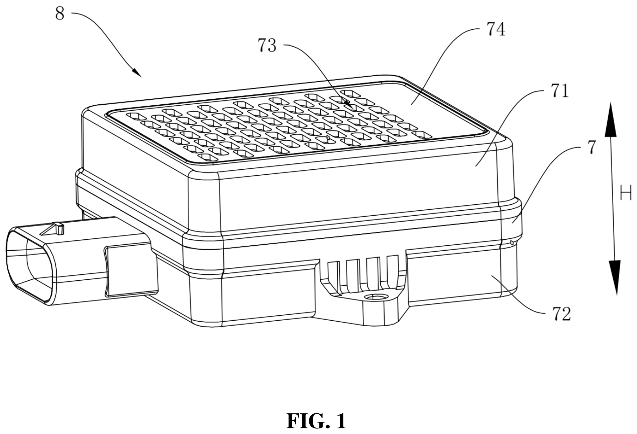

FIG. 1 is a schematic view of a detection device according to a first embodiment of the present application;
FIG. 2 is a schematic exploded view of FIG. 1;
FIG. 3 is a schematic perspective sectional view of a detection shell in FIG. 2;
FIG. 4 is a schematic view of a first housing in FIG. 1;
FIG. 5 is a schematic view of a mounting part in FIG. 2;
FIG. 6 is a schematic perspective sectional view of the mounting part in FIG. 5;
FIG. 7 is a schematic view of the detection shell, a mounting cup and a light source module in FIG. 2 from another perspective;
FIG. 8 is a schematic view of the detection shell and a detection probe in FIG. 2;
FIG. 9 is a schematic top structural view of a part of structure of the detection device;
FIG. 10 is a schematic view of a relationship between a first straight line and a second straight line shown in FIG. 9;
FIG. 11 is a schematic view of a detection device according to a second embodiment of the present application;
FIG. 12 is a schematic exploded view of FIG.11;
FIG. 13 is schematic perspective sectional view of a detection shell in FIG. 12;
FIG. 14 is a schematic perspective sectional view of FIG. 3 from another perspective;
FIG. 15 is a schematic view of a first housing in FIG. 11;
FIG. 16 is a schematic view of the detection shell, a base, a light source module, a detection probe and a circuit board in FIG. 11;
FIG. 17 is a schematic view of the detection shell, the base, the light source module and the detection probe in FIG. 11;
FIG. 18 is a schematic top structural view of a part of structure of the detection device;
FIG. 19 is a schematic view of a relationship between a first straight line and a second straight line shown in FIG. 18;
FIG. 20 is a schematic view of a detection device in a related art;
FIG. 21 is a schematic partially enlarged view of a portion A in FIG. 14;
FIG. 22 is a schematic view of a detection device according to a third embodiment of the present application;
FIG. 23 is a schematic exploded view of the detection device in FIG. 22;
FIG. 24 is a schematic view of a part of structure in FIG. 23 from another perspective;
FIG. 25 is a schematic perspective sectional view of a part of structure in FIG. 24;
FIG. 26 is a schematic view of a first housing according to an embodiment of the present application from one perspective;
FIG. 27 is a schematic top structural view of a part of structure of a detection device according to an embodiment of the present application;
FIG. 28 is a schematic view of a relationship between a first straight line and a second straight line according to an embodiment of the present application;
FIG. 29 is a schematic view of a detection device according to a fourth embodiment of the present application;
FIG. 30 is a schematic exploded view of a part of structure in FIG. 29;
FIG. 31 is a schematic view of FIG. 30 from another perspective;
FIG. 32 is a schematic perspective sectional view of a part of structure in FIG. 29;
FIG. 33 is a schematic exploded view of a part of structure of a device according to an embodiment of the present application;
FIG. 34 is a schematic structural view of the first housing;
FIG. 35 is a schematic top structural view of a part of structure of the detection device, which is a top view from two perspectives;
FIG. 36 is a schematic view of a relationship between a first straight line and a second straight line shown in FIG. 35;
FIG. 37 is a perspective view of a gas detection device according to a fifth embodiment of the present application;
FIG. 38 is a perspective sectional view of FIG. 37, showing an interior structure of the housing;
FIG. 39 is an exploded view of FIG. 38, showing a shell part, a blocking part and an abutting part;
FIG. 40 is a perspective view of an upper housing, the blocking part and the shell part in FIG. 37;
FIG. 41 is a perspective view of FIG. 40 with removal of the shell part and the blocking part, showing the structure of the abutting part;
FIG. 42 is a perspective view of FIG. 41 with removal of the abutting part, showing a second groove and a first communication hole;
FIG. 43 is a perspective view of the blocking part in FIG. 39;
FIG. 44 is a perspective sectional view of the blocking part, the abutting part, and the shell part in FIG. 40;
FIG. 45 is a sectional view of FIG. 43; and
FIG. 46 is a perspective sectional view of the shell part in FIG. 39, showing a reflection cup, a light source and a detection probe.

### DETAILED DESCRIPTION OF THE EMBODIMENTS

In order to better understand the technical solution of the present application, a detailed description of the embodiments of the present application will be provided below in conjunction with the accompanying drawings.

It should be noted that the described embodiments are only a part of the embodiments of the present application rather than all of them. Based on the embodiments in the present application, all other embodiments obtained by those skilled in the art without creative labor are within the protection scope of the present application.

### Embodiment 1

The detection device 8 includes a housing 7, a light source module 2, a detection shell 1, a first circuit board 4, and a detection probe 3. The housing 7 defines an inner chamber 70 and multiple second vent holes 73. The multiple second vent holes 73 are in gaseous communication with the inner chamber 70, and the multiple second vent holes 73 are in gaseous communication with an outside of the detection device 8. The first circuit board 4, the detection shell 1, the light source module 2, and the detection probe 3 are all located inside the inner chamber 70. The light source module 2 is at least partially located inside the detection shell 1. The light source module 2 is electrically and physically connected to the first circuit board 4. The light source module 2 is preferably an infrared light source module, and the detection shell 1 is preferably of a cylindrical shape. The detection shell 1 defines an optical gas chamber 5, and the detection probe 3 is at least partially located in the optical gas chamber 5 of the detection shell 1. The detection probe 3 is electrically connected to the first circuit board 4.

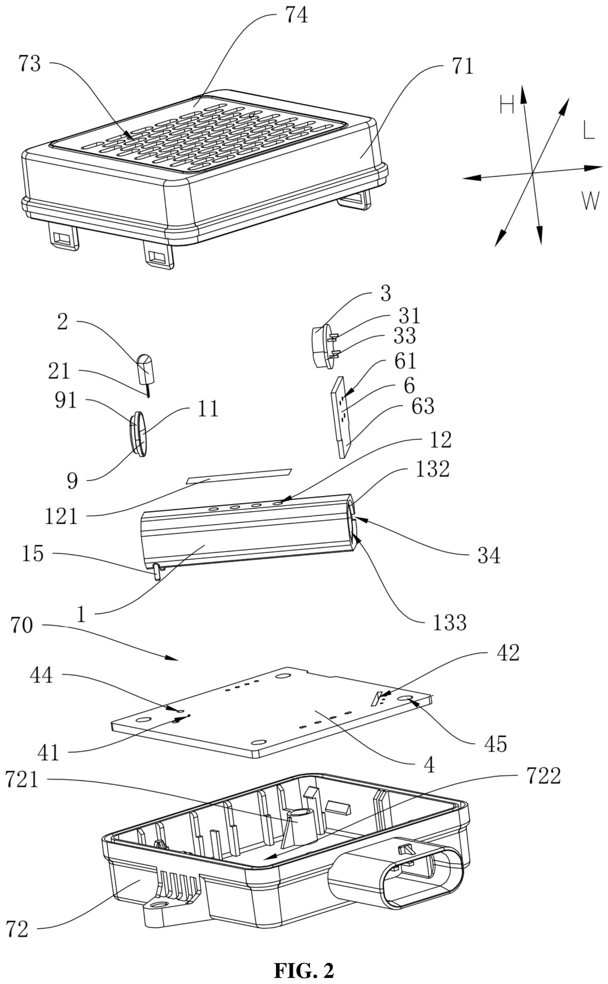

Referring to FIG. 2, the detection shell 1 and the first circuit board 4 are arranged in a height direction H of the detection device 8. The detection shell 1 has a length direction and a width direction. The detection device 8 has a transverse direction W and a longitudinal direction L. The transverse direction W is parallel to the length direction of the detection shell 1, and the longitudinal direction L is parallel to the width direction of the detection shell 1. The detection shell 1 and the first circuit board 4 are arranged in the height direction H of the detection device 8.

In some embodiments, as shown in FIG. 2, the housing 7 includes a first housing 71 and a second housing 72. The first housing 71 and the second housing 72 are arranged in the height direction H and are connected with each other. Specifically, the first housing 71 and the second housing 72 are connected by adhesive or snap fitting.

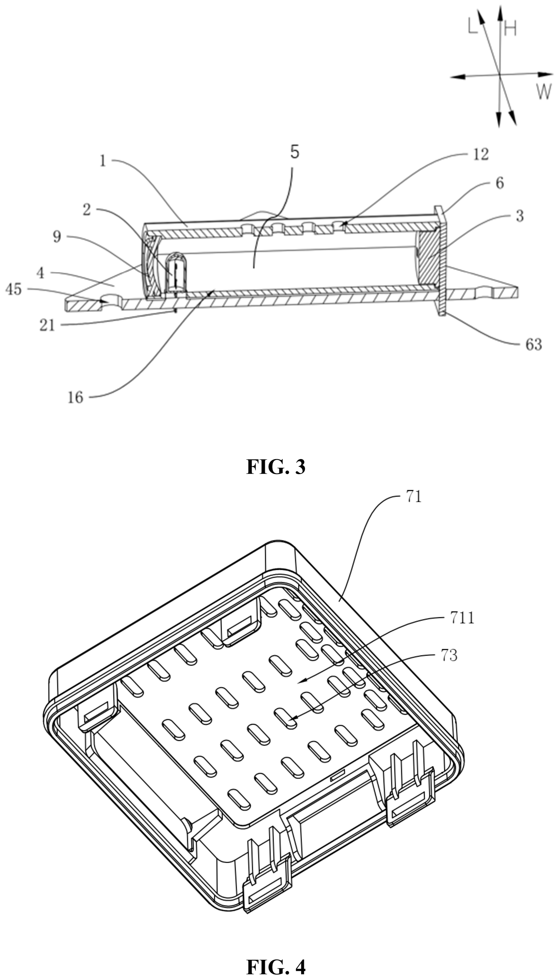

In some embodiments, as shown in FIG. 2 and FIG. 4, the second housing 72 has multiple second positioning portions 721. The first circuit board 4 defines multiple second positioning holes 45, and the second positioning portions 721 match with the second positioning holes 45, so as to fix the first circuit board 4. The second housing 72 defines a second inner chamber 722, and the first circuit board 4 is located in the second inner chamber 722. Specifically, four second positioning portions 721 and four second positioning holes 45 are preferable. In some embodiments, the first housing 71 defines a first inner chamber 711 and a top surface 74. The first inner chamber 711 is in communication with the second inner chamber 722, and the first inner chamber 711 and the second inner chamber 722 together form an inner chamber 70. The top surface 74 is arranged far from the first circuit board 4 relative to the first inner chamber 711. The top surface 74 defines multiple second vent holes 73, which are in gaseous communication with the first inner chamber 711. The second vent holes 73 are in gaseous communication with the outside of the detection device 8. The housing 7 is used to protect the detection device 8, so that the detection device 8 is not easily affected or damaged by the external environment during detection.

In order to improve a detection precision of the detection device 8, the detection device 8 further includes a waterproof gas-permeable membrane 121, which is used to prevent impurities such as moisture or dust from entering the detection shell 1 and thus affecting the detection precision. In some embodiments, referring to FIG. 2, the detection shell 1 defines multiple first vent holes 12 and an optical gas chamber 5. The multiple first vent holes 12 are in gaseous communication with the outside of the detection device 8. The multiple first vent holes 12 are in gaseous communication with the gas cell 5. The multiple first vent holes 12 are in gaseous communication with the inner chamber 70. The multiple first vent holes 12 are arranged at least partially opposite to the multiple second vent holes 73. The waterproof gas-permeable membrane 121 is located between the multiple first vent holes 12 and the multiple second vent holes 73 and covers the multiple first vent holes 12. The waterproof gas-permeable membrane 121 may be made of waterproof and gas-permeable porous materials coated topolyester fiber fabrics manufactured by specific processes, which has a pore size in the nanometer range. Therefore, the waterproof gas-permeable membrane 121 can have functions of waterproof, dustproof, and gas permeability. The waterproof gas-permeable membrane 121 is used to further extend the service life of the product. The waterproof gas-permeable membrane 121 may cover the first vent holes 12 by pasting. Specifically, four first vent holes 12 are preferable, which are sequentially arranged on the detection shell 1 in the transverse direction W of the detection device 8.

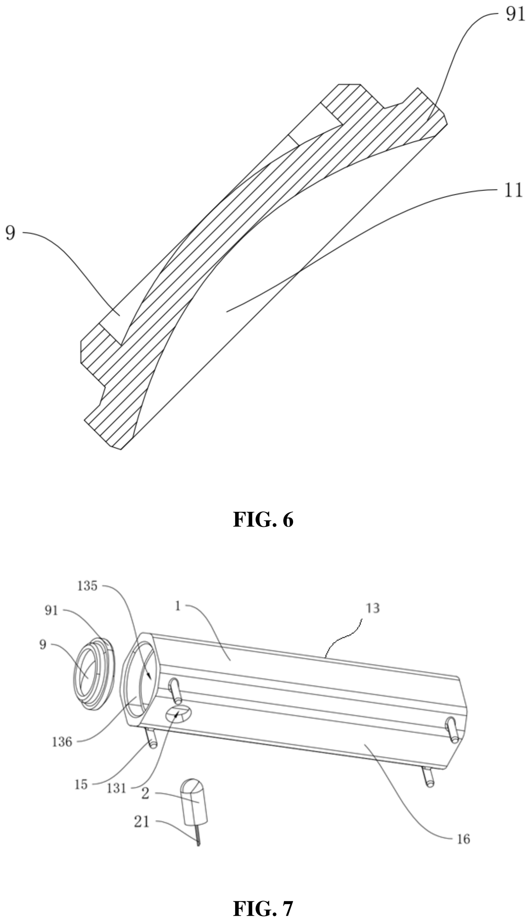

In some embodiments, as shown in FIG. 3 and FIG. 6, the detection shell 1 further includes a reflective surface, which may be defined as a first reflective surface 11. The first reflective surface 11, the light source module 2, and the detection probe 3 are arranged in sequence in the transverse direction W of the detection device 8. The first reflective surface 11 is located on the periphery of the optical gas chamber 5, and light can be emitted from the light source module 2 to the first reflective surface 11 and then is reflected by the first reflective surface 11 towards the detection probe 3. As such, the light can reach the detection probe 3 only by one reflection, which reduces the waste of light due to multiple reflections and further improves the detection precision of the detection device 8.

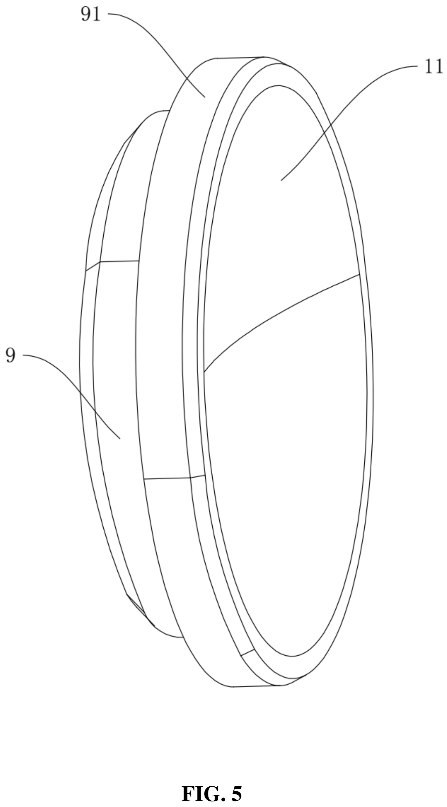

In order to better converge and reflect light, in some embodiments, referring to FIG. 5 and FIG. 6, the detection shell 1 includes a mounting part 9 and a first shell 13. The first reflective surface 11, which is located on the periphery of the optical gas chamber 5, is provided on the mounting part 9. The reflective surface 11 is arc-shaped. Further, the first reflective surface 11 is preferably parabolic, and a focal point or a center point of the first reflective surface 11 coincides with a receiving surface of the detection probe 3 to converge and reflect the light to the detection probe 3.

For easy installation of the detection device 8, in some embodiments, referring to FIG. 7, the first shell 13 defines a third through hole 135 and a second hole groove 136. The third through hole 135 extends through the first shell 13 in the transverse direction W. The third through hole 135 is in communication with the optical gas chamber 5, and the third through hole 135 is coaxially arranged with the second hole groove 136. The second hole groove 136 is in communication with the third through hole 135, and the mounting part 9 is at least partially located in the second hole groove 136. The mounting part 9 is provided with a second step portion 91, which is connected to a wall of the second hole groove 136. Specifically, the connection may be in a manner of sealing ring or sealant or interference fitting or a threaded connection, and the second step portion 91 is used to fix the position of the mounting part 9 relative to the third through hole 135.

For easy installation of the detection device 8, in some embodiments, the mounting part 9 is integrated with the first shell 13.

The detection shell 1 has a bottom wall portion 16, which is arranged towards the first circuit board 4 relative to the optical gas chamber 5. The bottom wall portion 16 defines a first through hole 131 (shown in FIG. 7) that extends through the detection shell 1. The light source module 2 is at least partially located in the first through hole 131, and a hole wall of the first through hole 131 is connected to the light source module 2. Specifically, the connection may be in a manner of sealing ring or sealant or interference fitting. The light source module 2 has a first pin 21, which is electrically connected to the first circuit board 4. Further, the first circuit board 4 defines a first corner hole 41, and the first pin 21 matches with the first corner hole 41 so as to the first pin 21 and the first circuit board can be connected by soldering. Compared with the related arts, one circuit board used for fixing the light source module 2 is saved, which simplifies the structure.

In some embodiments, as shown in FIG. 7 and FIG. 2, the detection shell 1 has a first positioning portion 15, which protrudes from the detection shell 1 in a direction away from the optical gas chamber 5. Specifically, the first positioning portion 15 is located on the bottom wall portion 16 of the detection shell 1 and protrudes away from the optical gas chamber 5. Specifically, two first positioning portions 15 are preferable. The first positioning portion 15 includes a cylindrical or elongated positioning stud, which is positioned adjacent to the first through hole 131 relative to the detection probe 3. The first circuit board 4 defines a first positioning hole 44, and the first positioning portion 15 is at least partially located in the first positioning hole 44. The first positioning portion 15 is connected to the first positioning hole 44. Specifically, the first positioning portion 15 is connected to the first positioning hole 44 in a fixed or position-limited manner, that is, the first positioning portion 15 is connected to a hole wall forming the first positioning hole 44 by, for example, welding, adhesive, or threaded connection, so as to fix the detection shell 1 to the first circuit board 4. Further, in some embodiments, four first positioning portions 15 are preferable for a better fixation between the detection shell 1 and the first circuit board 4.

For easy installation of the detection probe 3, in some embodiments, referring to FIG. 2, the detection shell 1 defines a second through hole 133, which extends through the first shell 13 in the transverse direction W. The second through hole 133 is in communication with the optical gas chamber 5. The detection shell 1 defines a first hole groove 132, which is coaxially arranged with the second through hole 133, and the first hole groove 132 is in communication with the second through hole 133. The detection probe 3 has a first step portion 33, which is at least partially located in the first hole groove 132. The first step portion 33 is sealedly connected to a wall of the first hole groove 132. Specifically, the sealed connection may be in a manner of sealing ring or sealant or interference fitting, which is used to fix a relatively position of the detection probe 3 to the detection shell 1.

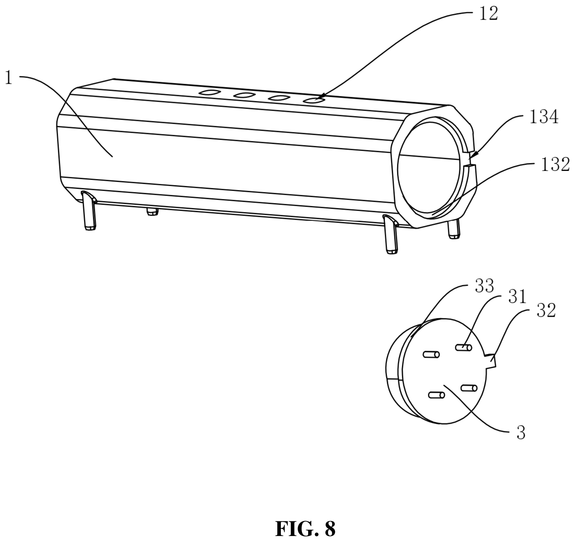

For easy installation of the detection probe 3, in some embodiments, referring to FIG. 8, the detection shell 1 further defines a notch 134, which is recessed from a groove side wall of the first hole groove 132 in a direction away from the first hole groove 132. The notch 134 is in communication with the first hole groove 132. The first step portion 33 further has a protrusion 32, which protrudes from the side wall of the first step portion 33 in a direction away from the first step portion 33. The protrusion 32 is at least partially located in the notch 134, and the protrusion 32 matches with the notch 134 to further fix the relative position of the detection probe 3 to the second through hole 133.

In some embodiments, as shown in FIG. 2, the detection device 8 further includes a second circuit board 6, and the detection probe 3 has multiple second pins 31. The second circuit board 6 defines multiple second corner holes 61, and at least a part of second pins 31 are located in the multiple second corner holes 61. The second pins 31 are electrically connected to the multiple second corner holes 61, and the second circuit board 6 is electrically connected to the first circuit board 4. Specifically, the second pin 31 includes a cylindrical pin or a rectangular pin. The second circuit board 6 is connected to the detection shell 1. Specifically, the second circuit board 6 may be bonded to the detection shell 1 by gluing so as to fix the detection probe 3 on the detection shell 1. Specifically, four second pins 31 and four second corner holes 61 are preferable.

For easy installation of the detection probe 3, in some embodiments, referring to FIG. 2, the second circuit board 6 has an insertion portion 63. Specifically, the insertion portion 63 can be a rectangular insertion portion 63 or an elliptical insertion portion 63, preferably a rectangular insertion portion 63. The insertion portion 63 is integrated with the second circuit board 6 and is electrically connected to the second circuit board 6. The first circuit board 4 further defines an insertion hole 42. Specifically, the insertion hole 42 is preferably a rectangular through hole, and the insertion portion 63 is at least partially located in the insertion hole 42. The insertion portion 63 is connected to a hole wall forming the insertion hole 42. The insertion portion 63 is electrically connected to the first circuit board 4 so as to electrically and indirectly connect the detection probe 3 to the first circuit board 4.

The principle of the detection device 8 is explained as follows: different gases have their own absorption spectra due to differences in their molecular structure, concentration, and energy distribution. When a target gas is detected, the absorption for lights at specific wavelengths follows Lambert Beer's law. Taking the light source module 2 of an infrared light source as an example, when the light source module 2 emits an infrared beam that passes through the optical gas chamber 5 and reaches the detection probe 3, the target gas absorbs the infrared light at a specific wavelength. That is, the target gas leaked from the outside can enter the inner chamber 70 through the structure of second vent holes 73 of the housing 7, and then enter the optical gas chamber 5 through the first vent holes 12 on the detection shell 1. The target gas entering the optical gas chamber 5 can absorb the infrared light at the specific wavelength. As such, the detection probe 3 can calculate the concentration and other information of the target gas by detecting the variation in light intensity.

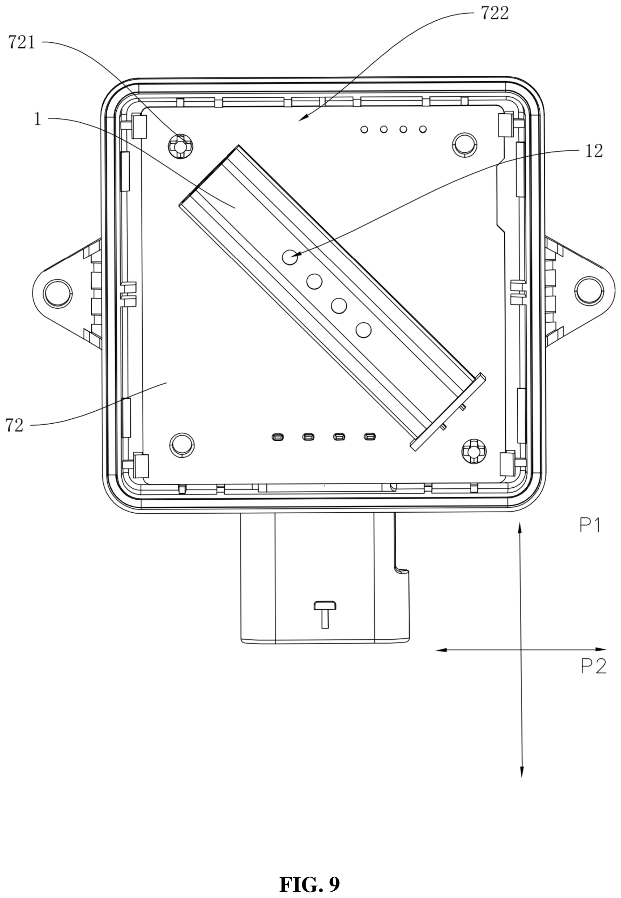

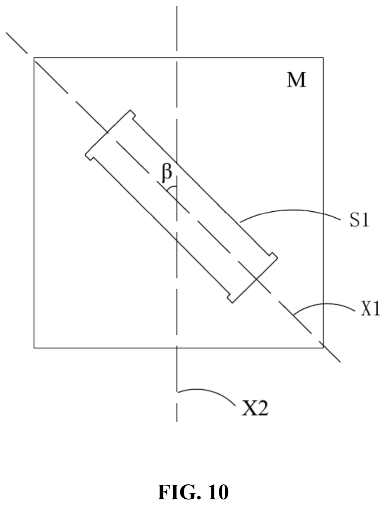

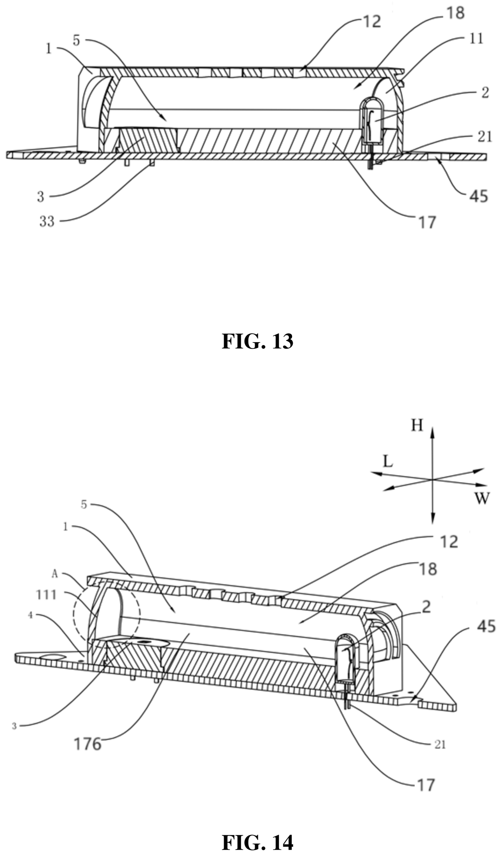

In order to improve the detection precision of the detection device 8, in some embodiments, referring to FIG. 9, the cylindrical detection shell 1 needs to have a certain length. In order to achieve a relatively long length of the detection shell 1 in a limited space, in the present application, referring to FIG. 10, a first straight line X1 and a second straight line X2 are defined on a first plane M perpendicular to the height direction H of the detection device 8. The detection shell 1 has a first projection S1 on this plane, and the first straight line X1 extends in a length direction of the first projection S1. The second straight line X2 extends in the width or length direction of the detection device 8. As shown in FIG. 10, the width direction of the detection device 8 refers to a direction P2, and the length direction of the detection device 8 may refer to the direction P1. In FIG. 13, the second straight line X2 has the same extension direction as a centerline of the detection device 8 in the width direction. The first straight line X1 is oblique at an acute angle β relative to the second straight line X2, which is beneficial for expanding an installation space of the detection shell 1 and is further beneficial for extending a distance between the light source module 2 and the detection probe 3. As such, the infrared light can be absorbed by the gas more fully through a long optical path, which is beneficial for improving the detection precision of the detection device 8.

A method for assembling the detection device 8 includes the following steps:
electrically connecting the light source module 2 and the first circuit board 4;
electrically connecting the detection probe 3 and the second circuit board 6, where the first step portion 33 of the detection probe 3 is placed in the first hole groove 132, so that the protrusion of the first step portion 33 is located at the notch 134, the detection probe 3 is at least partially located in the second through hole 133 and the second circuit board 6 is sealedly connected to the detection shell 1;
installing the mounting part 9 in the second hole groove 136, where the mounting part 9 is connected to the groove wall of the second hole groove 136;
inserting the insertion portion 63 on the second circuit board 6 into the insertion hole 42 on the first circuit board 4, and electrically connecting the insertion portion 63 to the first circuit board 4, where the first circuit board 4 and the second circuit board 6 are indirectly and electrically connected through the insertion portion 63 and the insertion hole 42, the light source module 2 is inserted into the first through hole 131 when the insertion portion 63 is inserted into the insertion hole 42, and thus the detection shell 1, the detection probe 3, and the mounting part 9 are all installed on the first circuit board 4. The structure is simple and easier to install.

### Embodiment 2

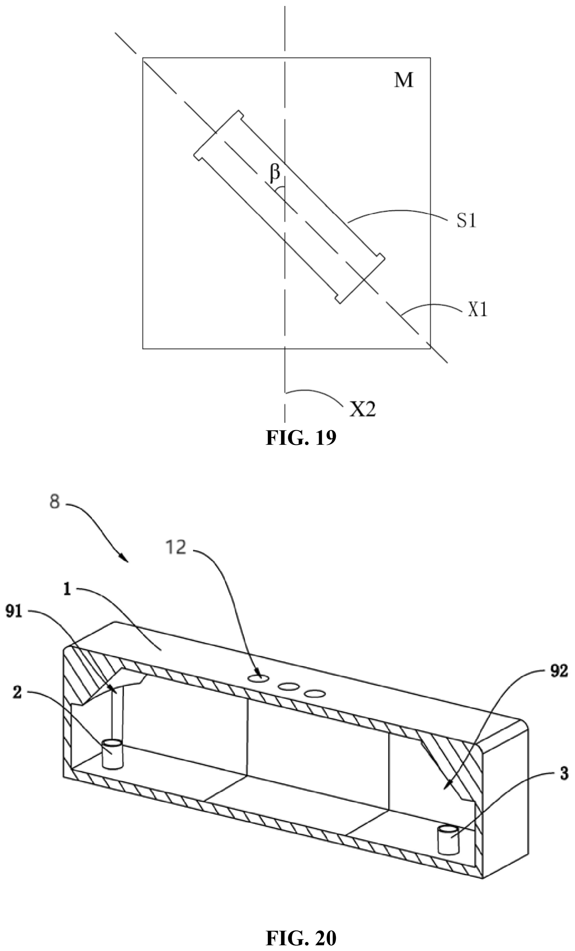

Referring to FIG. 20, the detection device 8 in the related art consists of a light source module 2, a detection probe 3, a detection shell 1, and a circuit board. The detection shell 1 includes a light source reflective chamber 91 and a spotlight reflective chamber 92. The light source module 2 is located inside the light source reflective chamber 91 and is electrically connected to the circuit board. The detection probe 3 is located inside the spotlight reflective chamber 92 and is electrically connected to the circuit board. As known from the absorption properties of the medium, when the light passes through the gas to be detected, a part of light is absorbed by the gas and another part is scattered by the gas. The light scattered by the gas is reflected by the light source reflective chamber 91 to the spotlight reflective chamber, and is then reflected by the spotlight reflective chamber 92 to the detection probe 3. However, a diffuse reflection occurs on the light inside the detection shell 1, causing light loss and thus affecting the detection precision.

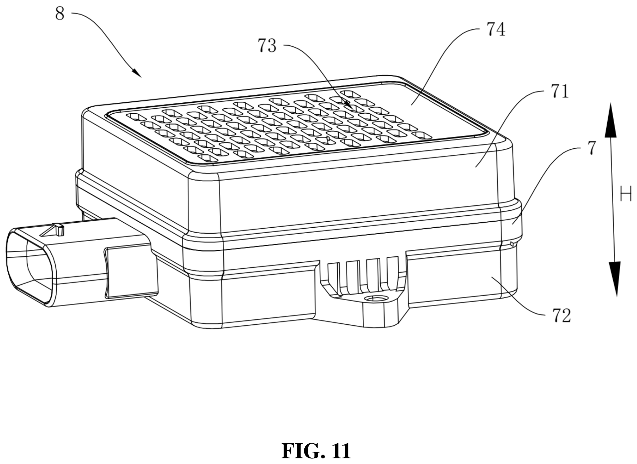

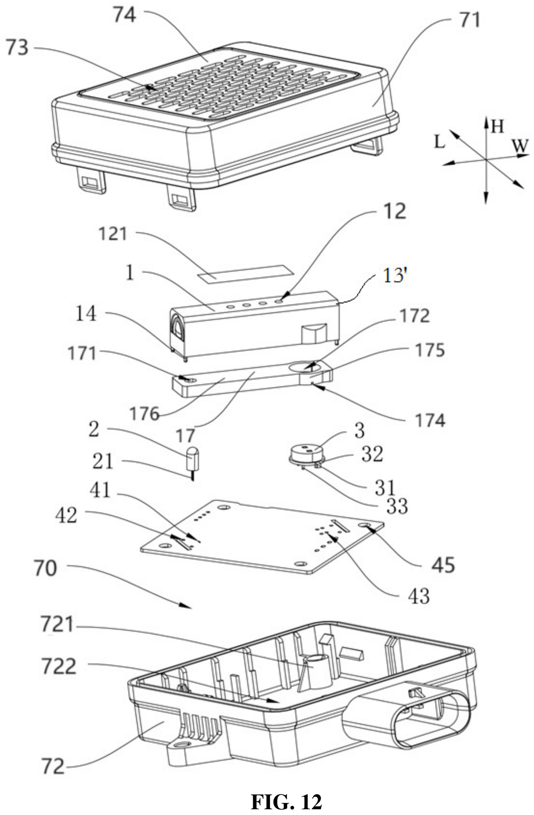

Referring to FIG. 11 and FIG. 12, the detection device 8 includes a housing 7, a light source module 2, a detection shell 1, a first circuit board 4, and a detection probe 3. The detection shell 1 preferably has a cylindrical shape, and the detection shell 1 defines an optical gas chamber 5. The housing 7 defines an inner chamber 70 and multiple second vent holes 73. The inner chamber 70 and the outside of the detection device 8 are in gaseous communication through the second vent holes 73. The first circuit board 4, the detection shell 1, the light source module 2, and the detection probe 3 are all located in the inner chamber 70. The light source module 2 is preferably an infrared light source module 2, and the light source module 2 is at least partially located in the optical gas chamber 5. The light source module 2 is electrically connected to the first circuit board 4. The detection probe 3 is at least partially located inside the optical gas chamber 5 and is electrically connected to the first circuit board 4.

Referring to FIG. 12, the detection shell 1 and the first circuit board 4 are arranged in a height direction H of the detection device. The detection shell 1 has a length direction and a width direction, and the detection device 8 has a transverse direction W and a longitudinal direction L. The transverse direction W is parallel to the length direction of the detection shell 1, and the longitudinal direction L is parallel to the width direction of the detection shell 1.

Referring to FIG. 13, the detection shell 1 includes a first reflective surface 11 located on the periphery of the optical gas chamber 5. In order to improve the detection precision of the detection device 8, the first reflective surface 11 is at least partially coated with a reflective layer 19 to increase the reflectivity of light in the optical gas chamber 5, reduce the light loss caused by diffuse reflection of light in the detection shell 1 and thus improve the detection precision of the detection device 8.

In order to further improve the detection precision of the detection device 8, in some embodiments, as shown in FIG. 13, the detection shell 1 includes a first wall portion 18, which is located on the periphery of the optical gas chamber 5. The first wall portion 18 is at least partially coated with a reflective layer 19. Further, the first wall portion 18 is preferably made of plastic or aluminum.

In some embodiments, the reflective layer 19 includes one of an aluminum coating or a gold coating, preferably gold coating. The reflectivity of the gold coating reflective layer 19 in the infrared band is up to 95%, and the stability of the reflective layer 19 applied with a gold coating is high. When the light is irradiated onto the reflective layer 19, the reflectivity of the light increases while the diffuse reflection of the light is reduced, which reduces the loss of light and improves the detection precision of the detection device 8.

In order to further improve the detection precision of the detection device 8, in some embodiments, as shown in FIG. 14, the detection shell 1 has a second reflective surface 111, which is located on the periphery of the optical gas chamber 5. The first reflective surface 11 and the second reflective surface 111 are located on two opposite sides in the length direction of the detection shell 1. The first reflective surface 11, the light source module 2, the detection probe 3, and the second reflective surface 111 are arranged in sequence in the length direction L. As such, the light reaches a receiving surface of the detection probe 3 only by two reflections in the optical gas chamber, which reduces the reflection times and thus reduces the loss of light, further improving the detection precision of the detection device 8. In some embodiments, both the first reflective surface 11 and the second reflective surface 111 are arc-shaped. Further, both the first reflective surface 11 and the second reflective surface 111 are preferably parabolic. The focal point or the center point of the first reflective surface 11 coincides with an emission center of the light source module 2, and the focal point or the center point of the second reflective surface 111 coincides with the center of the receiving surface of the detection probe 3, which improves light utilization efficiency. Further, the second reflective surface 12 is at least partially coated with the reflective layer 19.

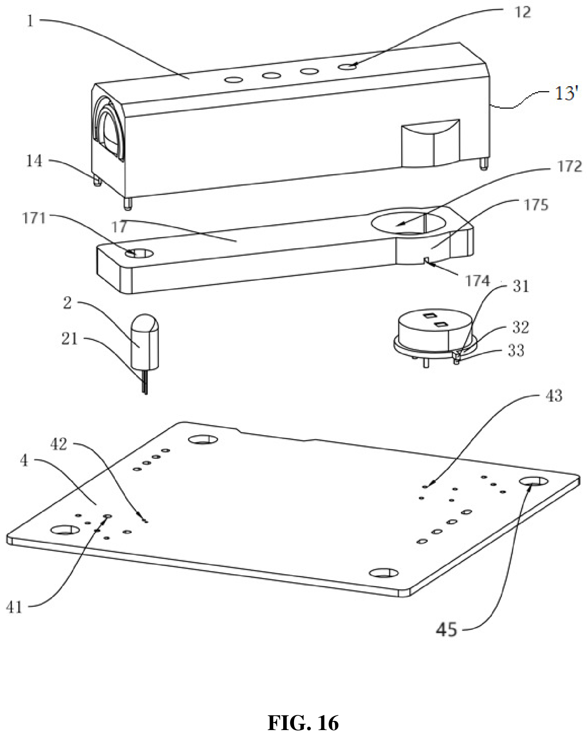

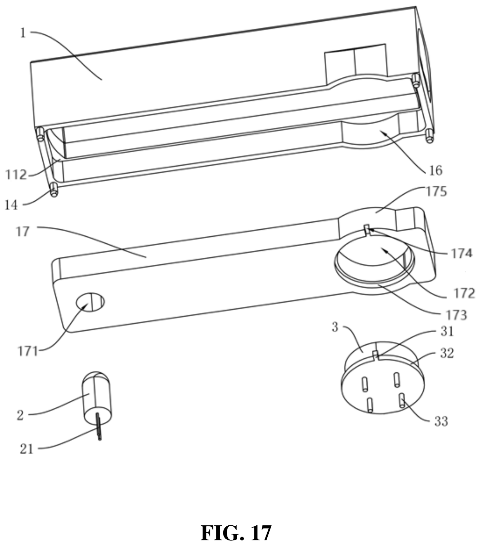

In some embodiments, as shown in FIG. 12 and FIG. 16, the detection shell 1 includes a second shell 13' and a base 17. The base 17 and the second shell 13' of the detection shell 1 are separately arranged. The second shell 13' defines an opening at the bottom, and the base 17 matches with the bottom opening of the second shell 13'. The base 17 includes an upper surface 176, which is located on the periphery of the optical gas chamber 5. Further, the upper surface 176 is at least partially coated with the reflective layer 19. The base 17 is positioned adjacent to the first circuit board 4 relative to the optical gas chamber 5 and matches with the detection shell 1. Specifically, the detection shell 1 may be mounted on the base 17 by pressing, welding, or gluing. In some embodiments, as shown in FIG. 17, the detection shell 1 defines a second hole groove 112, which is arranged in the inner wall of the detection shell 1. The second hole groove 112 is positioned adjacent to the first circuit board 4 relative to the first vent holes 13, and the base 17 is at least partially located in the second hole groove 112. Specifically, the base 17 is in transition or interference fit with the second hole groove 112 so as to fix a relative position of the detection shell 1 to the base 17. The base 17 defines a first through hole, which includes a first sub through hole 171 and a second sub through hole 172. The first sub through hole 171 and the second sub through hole 172 both extend through the base 17 in the height direction H. The light source module 2 is at least partially located in the first sub through hole 171. Specifically, the light source module 2 is in clearance fit with the hole wall of the first sub through hole 171. Alternatively, a circular cushion is bonded to the hole wall of the first sub through hole 171, and the light source module 2 then cooperates with the hole wall of the first sub through hole 171. The light source module 2 has a first pin 21, and the first circuit board 4 defines a first corner hole 42. An electrical connection between the light source module 2 and the first circuit board 4 may be achieved by soldering the first corner hole 42 and the first pin 21. The detection probe 3 is at least partially located in the second sub through hole 172. Specifically, the detection probe 3 may cooperate with the second sub through hole 172 by pressing, welding, or gluing. The detection probe 3 is provided with a second pin 33, and the first circuit board 4 defines a second corner hole 43. An electrical connection between the detection probe 3 and the first circuit board 4 may be achieved by soldering the second pin 33 and the second corner hole 43. In this embodiment, the detection probe 3 is directly and electrically connected to the first circuit board 4 without providing the second circuit board 6.

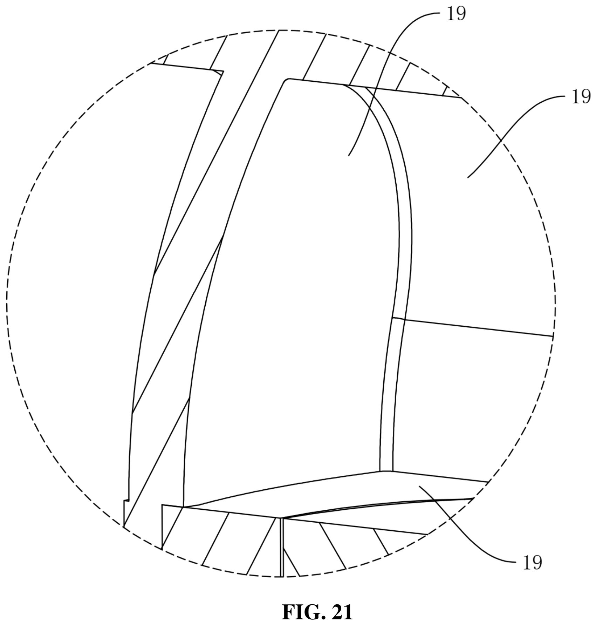

In some embodiments, as shown in FIG. 21, which is an schematic partially enlarged view of a portion A in FIG. 14, the first reflective surface 11, the second reflective surface 111, the first wall portion 18, and the upper surface 176 are all coated with the reflective layer 19.

In some embodiments, as shown in FIG. 17, the second sub through hole 172 defines a first hole groove 173, which is coaxially arranged with the second sub through hole 172, and the first hole groove 173 is in communication with the second sub through hole 172. The detection probe 3 has a second step portion 32, which is at least partially located in the first hole groove 173. Specifically, the second step portion 32 may cooperate with the first hole groove 173 by pressing, welding or gluing, so as to fix a relative position of the detection probe 3 to the second sub through hole 172.

In some embodiments, as shown in FIG. 17, the detection shell 1 has a first recess portion 16, which is recessed from a groove side wall of the first hole groove 173 in a direction away from the first hole groove 173. The base 17 has a second recess portion 174, which is recessed from a groove side wall of the first hole groove 173 in a direction away from the first hole groove 173. The second recess portion 174 is in communication with the first hole groove 173. The second step portion 32 further has a first protrusion 31, which is connected to the second step portion 32. The first protrusion 31 protrudes from the side wall of the second step portion 32 in a direction away from the second step portion 32. The first protrusion 31 is at least partially located in the second recess portion 174, and the first protrusion 31 cooperates with the second recess portion 174 to further fix a relative position of the detection probe 3 to the second sub through hole 172. Specifically, the second step portion 32 is sealedly connected to the hole wall of the first hole groove 173, or the second step portion 32 is in clearance fit with the hole wall of the first hole groove 173, or the second step portion 32 is connected to the hole wall of the first hole groove 173 through sealant.

In some embodiments, as shown in FIG. 17, the base 17 has a second protrusion 175, which protrudes from the side wall of the base 17 in a direction away from the side wall of the base 17. The second protrusion 175 is positioned adjacent to the second reflective surface 111 relative to the first reflective surface 11, or the second protrusion 175 is positioned adjacent to the first reflective surface 11 relative to the second reflective surface 111. The second protrusion 175 is connected to the first recess portion 16 in a cooperating manner.

In some embodiments, as shown in FIG. 12, the detection shell 1 has a first positioning portion 14, which is positioned adjacent to the first circuit board 4 relative to the optical gas chamber 5. Four first positioning portions 14 are preferable. Specifically, the first positioning portion 14 has a cylindrical or elongated shape, and protrudes outward from a side of the detection shell 1 facing the first circuit board 4 in the height direction H. The first circuit board 4 defines a first positioning hole 41, and the detection shell 1 and the first circuit board 4 are connected by welding or inserting the first positioning portion 14 to the first positioning hole 41 or by threaded connection of the first positioning portion 14 and the first positioning hole 41.

In order to improve the detection precision of the detection device 8, the detection device 8 further includes a waterproof gas-permeable membrane 121, which is used to prevent impurities such as moisture or dust from entering the detection shell 1 and thus affecting the detection precision. In some embodiments, referring to FIG. 11 and FIG. 12, the detection shell 1 defines multiple first vent holes 12 and an optical gas chamber 5. The multiple first vent holes 12 are in gaseous communication with the outside of the detection device 8, the first vent holes 12 are in gaseous communication with the optical gas chamber 5, the first vent holes 12 are in gaseous communication with the inner chamber 70, and the multiple first vent holes 12 are arranged at least partially opposite to the second vent holes 73. The waterproof gas-permeable membrane 121 is located between the multiple first vent holes 12 and the multiple second vent holes 73 and covers the multiple first vent holes 12. The waterproof gas-permeable membrane 121 may be made of waterproof and gas-permeable porous materials coated topolyester fiber fabrics manufactured by specific processes, which has a pore size in the nanometer range. Therefore, the waterproof gas-permeable membrane 121 can have functions of waterproof, dustproof, and gas permeability. The waterproof gas-permeable membrane 121 is used to further extend the product's service life. The waterproof gas-permeable membrane 121 may cover the first vent holes 12 by pasting. Specifically, four first vent holes 12 are preferable, which are sequentially arranged on the detection shell 1 in the transverse direction W of the detection device 8.

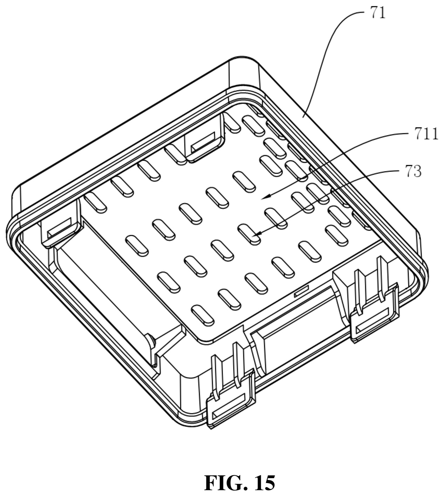

In some embodiments, as shown in FIG. 12 and FIG. 15, the second housing 72 has multiple second positioning portions 721. The first circuit board 4 defines multiple second positioning holes 44. The second positioning portions 721 cooperate with the second positioning holes 44 to fix the first circuit board 4. The second housing 72 defines a second inner chamber 722, and the first circuit board 4 is at least partially located in the second inner chamber 722. Specifically, four second positioning portions 721 and four second positioning holes 44 are preferable. In some embodiments, the first housing 71 defines a first inner chamber 711 and a top surface 74. The first inner chamber 711 is in communication with the second inner chamber 722, and the first inner chamber 711 and the second inner chamber 722 together form an inner chamber 70. The top surface 74 is arranged farther to the first circuit board 4 relative to the first inner chamber 711. The top surface 74 defines multiple second vent holes 73, which are in gaseous communication with the first inner chamber 711. The multiple second vent holes 73 are in gaseous communication with the outside of the detection device 8. The housing 7 is used to protect the detection device 8, so that the detection device 8 is not easily affected or damaged by the external environment during detection.

The principle of the detection device 8 is explained as follows: different gases have their own absorption spectra due to differences in their molecular structure, concentration, and energy distribution. When a target gas is detected, the absorption for lights at specific wavelengths by the target gas follows Lambert Beer's law. Taking light source module 2 of an infrared light source as an example, when the light source module 2 emits an infrared beam that passes through optical gas chamber 5 and reaches detection probe 3, the target gas absorbs the infrared light at a specific wavelength. That is, the target gas leaked from the outside can enter the inner chamber 70 through the multiple second vent holes 73 of the housing 7, and then enter the optical gas chamber 5 through the multiple first vent holes 12 on the detection shell 1. The target gas entering the optical gas chamber 5 can absorb the infrared light at the specific wavelength. As such, the detection probe 3 can calculate the concentration and other information of the target gas by detecting variation in light intensity.

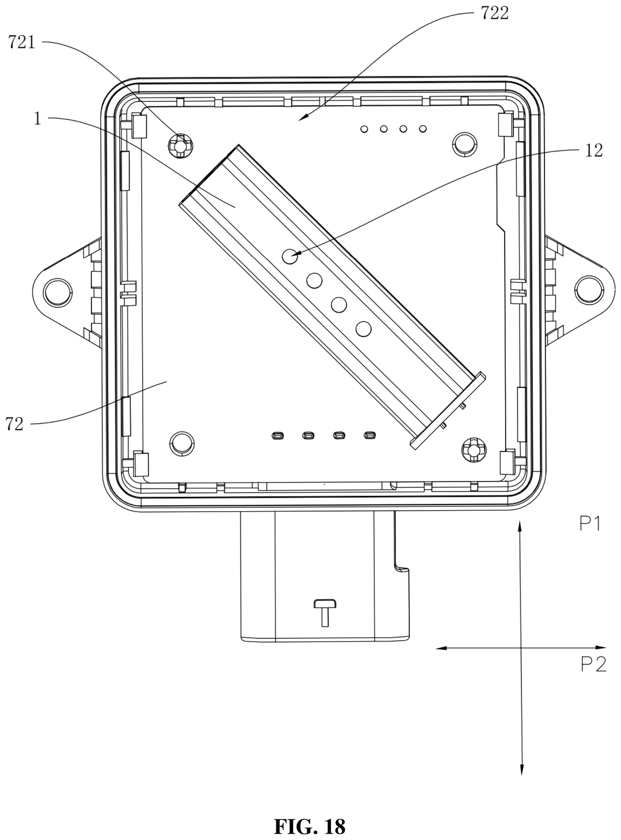

In order to improve the detection precision of the detection device 8, in some embodiments, the detection shell 1 needs to have a certain length. In order to achieve a relative long length of the detection shell 1 in a limited space, in the present application, referring to FIG. 18, a first straight line X1 and a second straight line X2 are defined on a first plane M perpendicular to the height direction H of the detection device 8. The detection shell 1 has a first projection S1 on the first plane M, and the first straight line X1 extends in the length direction of the first projection S1. The second straight line X2 extends in the width or length direction of the detection device 8. As shown in FIG. 19, the width direction of the detection device 8 may refer to the direction P2, and the length direction of the detection device 8 may refer to the direction P1. In FIG. 19, the second straight line X2 has the same extension direction as the centerline of the detection device 8 in the width direction. The first straight line X1 is oblique at an acute angle β relative to the second straight line X2, which is beneficial for expanding the installation space of the detection shell 1 and is further beneficial for increasing the distance between the light source module 2 and the detection probe 3. As such, the infrared light can be absorbed by the gas more fully through a long optical path, which is beneficial for improving the detection precision of the detection device 8.

A method for assembling the detection device 8 includes the following steps:
assembling the base 17 and the detection shell 1 by pressing to form the optical gas chamber 5;
making the pin 21 of the light source module 2 cooperate with the first corner hole 42 of the first circuit board 4, so that the light source module 2 is electrically connected to the first circuit board 4, where the light source module 2 is at least partially inserted into the first sub through hole 171;
soldering the second pin 33 of the detection probe 3 to the second corner hole 43 of the first circuit board 4, so that the detection probe 3 is electrically connected to the first circuit board 4, where the detection probe 3 is at least partially located in the second sub through hole 172, and the second step portion 32 of the detection probe 3 is at least partially placed in the first hole groove 173, so that the first protrusion 31 of the second step portion 32 is located at the notch 174;
installing the detection shell 1 as well as the light source module 2, the detection probe 3, and the base 17 onto the first circuit board 4 as a whole assembly, and then installing the whole assembly inside the housing in an inside-out manner, which makes the installation more convenient.

### Embodiment 3

Currently, there is no gap between the first circuit board 4 and the detection shell 1 in conventional detection devices. When the detection device is in operation, the first circuit board 4 has a poor heat dissipation capability, and excessive heat may cause a short circuit phenomenon during the operation of the detection device, which may stop the detection operation.

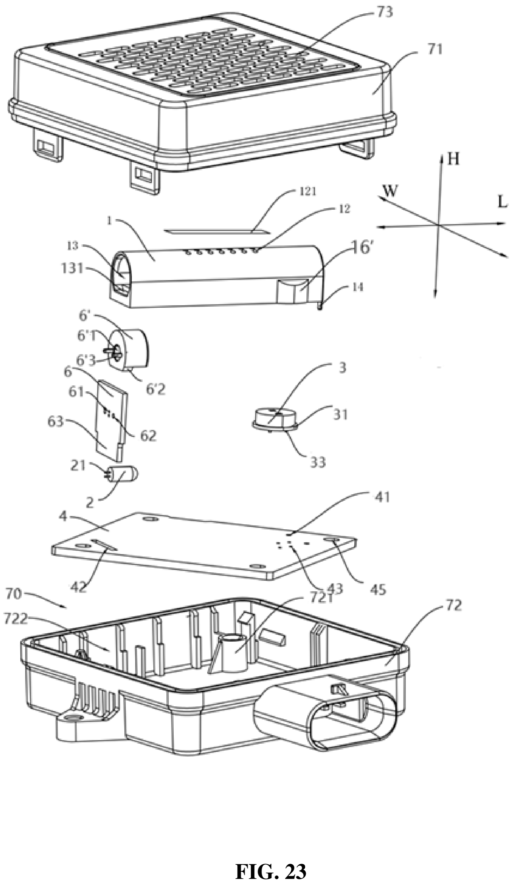

Referring to FIG. 23, the detection shell 1 has a length direction L, a transverse direction W, and a height direction H.

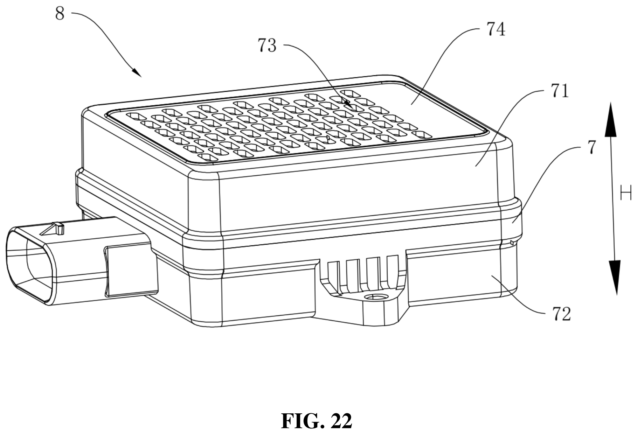

Referring to FIG. 22 and FIG. 23, the detection device 8 includes a detection shell 1, which defines an optical gas chamber 5. The detection shell 1 defines first vent holes 12. The first vent holes 12 are in gaseous communication with the outside of the detection device 8. The first vent holes 12 are in gaseous communication with the optical gas chamber 5. The detection device 8 further includes a first circuit board 4, a light source module 2, and a detection probe 3. The light source module 2 includes a light source part located in the optical gas chamber 5, and the detection probe 3 includes a detection head located in the optical gas chamber 5. The detection probe 3 is electrically connected to the first circuit board 4, and the light source module 2 is electrically connected to the first circuit board 4. In order for a better heat dissipation of the detection device 8 during operation, a gap 19 is formed between the detection shell 1 and the first circuit board 4.

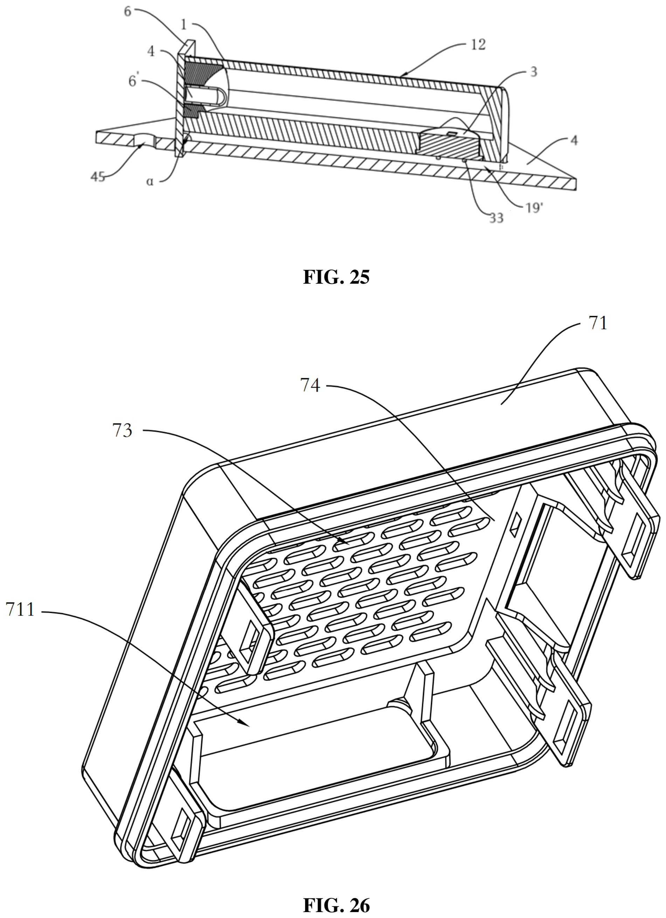

In some embodiments, the first circuit board 4 is located outside the detection shell 1. In the height direction H of the shell, an orthographic projection of the detection shell 1 on the first circuit board 4 is within an outer contour of the first circuit board 4, as shown in FIG. 23 and FIG. 25.

Further, in some embodiments, the detection shell 1 includes a first positioning portion 14, which protrudes from the detection shell 1 in a direction away from the optical gas chamber 5. The first circuit board 4 defines a second positioning hole 21, and the detection shell 1 is connected to the first circuit board 4. The detection shell 1 is connected to the first circuit board 4 through the first positioning portion 14 and the hole wall forming the second positioning hole 21, and the connection may be a fixed connection or a position-limited connection.

In some embodiments, the detection device 8 includes a second circuit board 6, which is electrically connected to the first circuit board 4. The second circuit board 6 has an insertion portion 31. The insertion portion 31 may be a rectangular or elliptical insertion portion 31. For example, as shown in FIG. 23, the insertion portion 31 is a cylindrical insertion portion 31, which is integrated with the second circuit board 6. The first circuit board 4 defines an insertion hole 42 for the first positioning hole 22, and the insertion portion 31 is at least partially located in the insertion hole 42 for the first positioning hole 22. The insertion portion 31 is connected to the hole wall forming the insertion hole 42 for the first positioning hole 22. It is designed that the insertion portion 31 is inserted into the insertion hole 42 for the first positioning hole 22, which makes the connection between the second circuit board 6 and the first circuit board 4 more firmly. The light source module 4 or the detection probe 3 is electrically connected to the second circuit board 6, and the second circuit board 6 is connected to the detection shell 1 in a fixed or position-limited manner. In the thickness direction of the first circuit board 4, the thickness direction of the first circuit board 4 is parallel to the height direction H of the detection shell 1, and at least part of the second circuit board 6 and the detection shell 1 are located on the same side of the first circuit board 4. The second circuit board 6 is connected to the first circuit board 4 in a fixed or position-limited manner, and the detection shell 1 is indirectly connected to the first circuit board 4 through the second circuit board 6.

In some embodiments, the light source module 2 is electrically connected to the second circuit board 6, the light source module 2 is at least partially located in the detection shell 1, the detection probe 3 is electrically and directly connected to the first circuit board 4, and the detection probe 3 is at least partially located in the detection shell 1. In order to improve the heat dissipation of the detection device 8 during operation, in some embodiments, as shown in FIG. 25, an included angle is formed between the second circuit board 6 and the first circuit board 4, and the optical gas chamber 5 is at least partially located within a range of the included angle α, where the angle α is greater than 0 degree. The distance between the detection shell 1 and the first circuit board 4 may be more appropriate when the included angle α is in a range of 60 degree to 120 degree. For example, as shown in FIG. 25, α is 90 degree. In some embodiments, in the thickness direction of the first circuit board 4, the distance I between the first circuit board 4 and the detection shell 1 is greater than or equal to 0.4mm and less than or equal to 0.7mm, preferably equal to 0.5mm, and the distance I is in a range of 0.4mm to 0.7mm. During the operation of the detection device 8, not only can the heat be dissipated normally, but also an appropriate spacing can prevent excessive dirt and dust from entering and thus affecting the service life of the detection device.

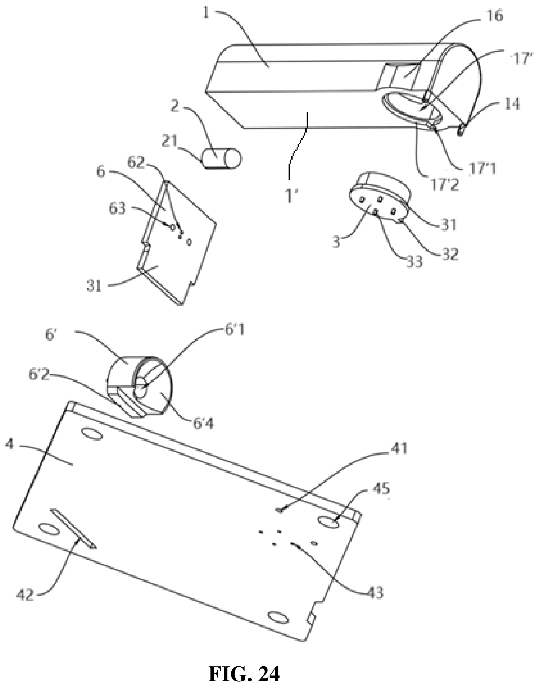

In some embodiments, as shown in FIG. 23 or FIG. 24, the first circuit board 4 is arranged parallel to the length direction L, and the first circuit board 4 is located aside the detection shell 1 in the height direction H of the detection shell 1.

In order to fix the light source module 2 more firmly, in some embodiments, referring to FIG. 24, the detection device 8 includes an mounting cup 6', which defines a first through hole 6'1, and the light source module 2 is at least partially located in the first through hole 6'1.

Further, in some embodiments, as shown in FIG. 23, the detection shell 1 defines a second through hole 13 and a groove 131. The second through hole 13 extends through the detection shell 1 in the transverse direction W, and the second through hole 13 is in communication with the optical gas chamber 5. The groove 131 is connected to a hole wall of the second through hole 13, and the mounting cup 6' is at least partially located in the second through hole 13. The mounting cup 6' defines a first step portion 6'2, which is at least partially located in the groove 131. The first step portion 6'2 is connected to the wall of the groove 131. Specifically, the first step portion 6'2 is in interference fit with a wall corresponding to the groove 131, or, the first step portion 6'2 is bonded to the wall corresponding to the groove 131 by adhesive. The first step portion 6'2 is used to limit a relative position of the mounting cup 6' to the second through hole 13, which facilitates of the installation of the detection shell 1 and the mounting cup 6'.

Further, in some embodiments, as shown in FIG. 23 and FIG. 24, the mounting cup 6' is connected to the second circuit board 6, and the second circuit board 6 is connected to the detection shell 1. The mounting cup 6' has a reflective surface 64 facing the optical gas chamber 5, and the first reflective surface 11 is arc-shaped.

Further, the focal point or the center point of the first reflective surface 11 coincides with a receiving surface of the detection probe 5 so as to converge and directly reflect the light onto the detection probe 3, which reduces the reflection times of light in the optical gas chamber 5 and thus lowers light loss. Further, the first reflective surface 11 may be applied with a gold coating, which increases reflectivity and improves the detection precision of the detection device 8.

In order to fix the mounting cup 6' and the second circuit board 6 more firmly, in some embodiments, the mounting cup 6' has a second pin 6'3, which protrudes in the direction away from the mounting cup 6'. For example, as shown in FIG. 23, the second pin 6'3 includes two second pins 6'3, and each second pin 6'3 has a bar or cylindrical shape. The second circuit board 6 defines a second corner hole 61, and the second corner hole 61 is connected to the mounting cup 6'. The second circuit board 6 and the mounting cup 6' are connected through the second pin 6'3 and the hole wall of the second corner hole 61, and the connection may be a fixed connection or a position-limited connection.

In order to fix the light source module 2 more firmly, in some embodiments, the light source module 2 includes a first pin 21, as shown in FIG. 23. Two first pins 21 are provided, and each first pin 21 has a bar or cylindrical shape. The second circuit board 6 defines a first corner hole 61, and the first corner hole 61 is connected to the light source module 2. The light source module 2 and the second circuit board 6 are connected through the first pin 21 and the hole wall of the first corner hole 61, and the connection may be a fixed connection or a position-limited connection.

In some embodiments, as shown in FIG. 3, the detection shell 1 includes a first protrusion 16', which protrudes from the detection shell 1 in a direction away from the detection shell 1. The first protrusion 16' is positioned adjacent to the first circuit board 4 relative to the optical gas chamber 5 and is positioned adjacent to the detection probe 3 relative to the light source module 2. Alternatively, the first protrusion 16' is positioned adjacent to the light source module 2 relative to the detection probe 3. The first protrusion 16' may be used to directly determine the position of the detection probe 3 or the light source module 2. In order to fix the detection probe 3 more firmly, in some embodiments, as shown in FIG. 18, the detection probe 3 has a third pin 33, which protrudes from the detection probe 3 in a direction away from the detection probe 3. Four third pins 33 are provided, and each third pin 33 has a bar or cylindrical shape. The first circuit board 4 defines a third corner hole 43, and the detection probe 3 is connected to the first circuit board 4. The detection probe 3 and the first circuit board 4 are connected through the third pin 33 and the hole wall forming the third corner hole 43, and the connection may be a fixed connection or a position-limited connection.

In some embodiments, as shown in FIG. 3, the detection shell 1 has a bottom surface 1' facing the first vent holes 12. The bottom surface 1' defines a third through hole 17', which is in communication with the optical gas chamber 5. The detection probe 3 is at least partially located in the third through hole 17'. Further, the bottom surface 1' further defines a first hole groove 17'2, which is coaxially arranged with the third through hole 17'. The first hole groove 17'2 is in communication with the third through hole 17'. The detection probe 3 has a second step portion 31, which is at least partially located in the first hole groove 17'2. The second step portion 31 is connected to a wall of the hole groove 17'2. Specifically, the second step portion 31 is in interference fit with the wall corresponding to the first hole groove 17'2, or the second step portion 31 is connected to the wall corresponding to the first hole groove 17'2 by adhesive.

Further, in order to fix a relative position of the detection probe 3 the third through hole 17' more precisely, in some embodiments, as shown in FIG. 19, the bottom surface 1' defines a notch 17'1, which is recessed from the side wall of the first hole groove 17'2 in a direction away from the first hole groove 172. The notch 17'1 is in communication with the first hole groove 17'2. The second step portion 31 further includes a second protrusion 32, which protrudes from the side wall of the second step portion 31 in a direction away from the second step portion 31. The second protrusion 32 is at least partially located in the notch 17'1, and the second protrusion 32 cooperates with the notch 17'1.

In order to prevent the detection device 8 from being affected and damaged by the external environment during detection, in some embodiments, the detection device 8 includes a housing 7, which is used to protect the detection device 8. Further, as shown in FIG. 18, the housing 7 includes a first housing 71 and a second housing 72. The first housing 71 and the second housing 72 are arranged in the height direction H and the first housing 71 and the second housing 72 are connected. Specifically, the first housing 71 and the second housing 72 are connected by adhesive or snap fitting.

Further, in some embodiments, as shown in FIG. 23 and FIG. 26, the second housing 72 is provided with multiple second positioning portions 721, the first circuit board 4 defines multiple second positioning holes 45, and the second positioning portions 721 cooperates with the second positioning holes 45 to fix the first circuit board 4. The second housing 72 defines a second inner chamber 722, and the first circuit board 4 is located in the second inner chamber 722. Specifically, four second positioning portions 721 and four second positioning holes 45 are preferable. In some embodiments, the first housing 71 defines a first inner chamber 711 and a top surface 74. The first inner chamber 711 is in communication with the second inner chamber 722, and the first inner chamber 711 and the second inner chamber 722 together form an inner chamber 70. The top surface 74 is arranged far from the first circuit board 4 relative to the first inner chamber 711. The top surface 84 defines multiple second vent holes 73, which are in gaseous communication with the first inner chamber 711 and with the outside of the detection device 8.

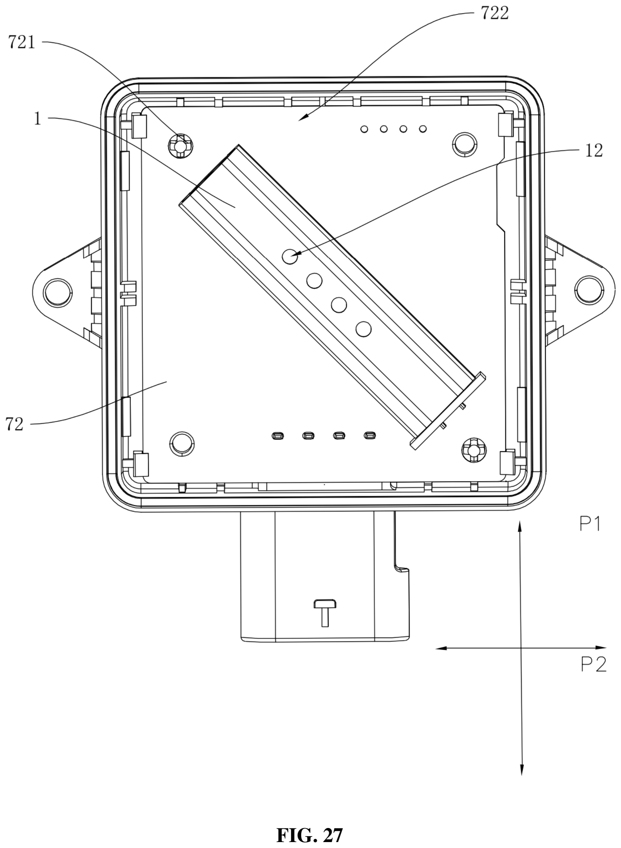

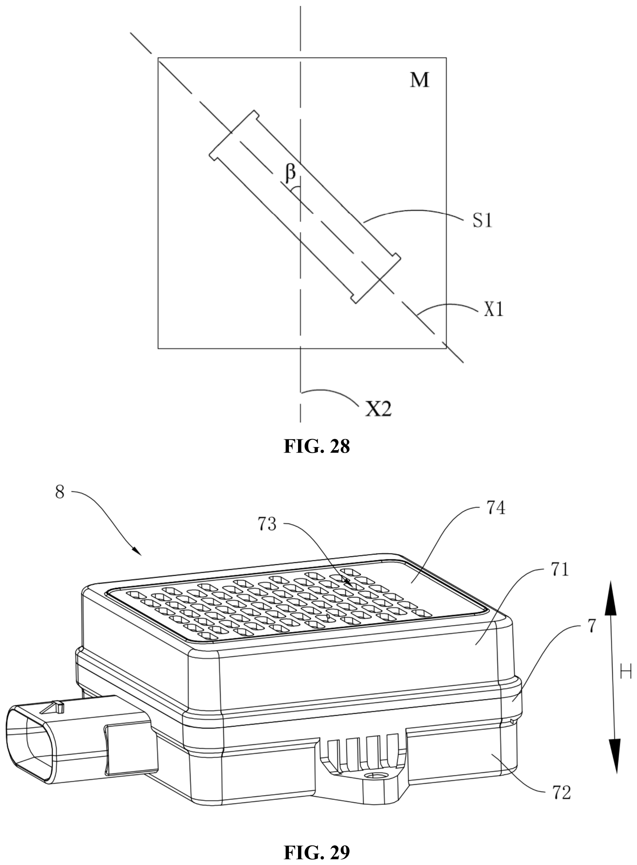

In order to improve the detection precision of the detection device 8, in some embodiments, referring to FIG. 27, the cylindrical detection shell 1 needs to have a certain length. In order to achieve a relative long length of the detection shell 1 in a limited space, in the present application, referring to FIG. 28, a first straight line X1 and a second straight line X2 are defined on a first plane M perpendicular to the height direction H of the detection device 8. The detection shell 1 has a first projection S1 on this plane, and the first straight line X1 extends in the length direction of the first projection S1. The second straight line X2 extends in the width or length direction of the detection device 8. As shown in FIG. 28, the width direction of the detection device 8 may refer to a direction P2, and the length direction of the detection device 8 may refer to the direction P1. In FIG. 28, the second straight line X2 has the same extension direction as the centerline of the detection device 8 in the width direction. The first straight line X1 is oblique at an acute angle β relative to the second straight line X2, which is beneficial for expanding the installation space of the detection shell 1 and is further beneficial for increasing the distance between the light source module 2 and the detection probe 3. As such, the infrared light can be absorbed by the gas more fully through a long optical path, which is beneficial for improving the detection precision of the detection device 8.

In order to further improve the detection precision of the detection device 8, the detection device 8 further includes a waterproof gas-permeable membrane 121, which is used to prevent impurities such as moisture or dust from entering the detection shell 1 and thus affecting the detection precision. In some embodiments, referring to FIG. 23, the detection shell 1 defines first vent holes 12, which are in gaseous communication with the optical gas chamber 5. The first vent holes 12 are in gaseous communication with the inner chamber 70. At least a part of first vent holes 12 are arranged opposite to the second vent holes 73, and the waterproof gas-permeable membrane 121 is located between the first vent holes 12 and the second vent holes 73 and covers the first vent holes 12. The waterproof gas-permeable membrane 121 may be made of waterproof and gas-permeable porous materials coated topolyester fiber fabrics manufactured by specific processes, which has a pore size in the nanometer range. Therefore, the waterproof gas-permeable membrane 121 can have functions of waterproof, dustproof, and gas permeability. The waterproof gas-permeable membrane 121 is used to further extend the product's service life. The waterproof gas-permeable membrane 121 may cover the first vent holes 12 by pasting. Specifically, the first vent holes 12 are preferably distributed in two rows, and the two rows of first vent holes 12 are sequentially arranged on the detection shell 1 in the transverse direction W of the detection device 8.

A method for assembling the detection device 8 includes the following steps:
S1. installing the light source module 2, where the light source module 2 is inserted into the mounting cup 6', the mounting cup 6' is installed in the second through hole 13, and the light source module 2 is electrically connected to the second circuit board 6.
S2. installing the detection probe 3, where the detection probe 3 is electrically and directly connected to the first circuit board 4, the second step portion 31 of the detection probe 3 is placed in the first hole insertion hole 17'2, so that the second protrusion 32 on the second step portion 31 is located at the notch 17'1, and the detection probe 3 is at least partially located in the third through hole 17'.
S3. installing the second circuit board 6, where the second circuit board 6 is directly connected to the detection shell 1 by adhesive, the insertion portion 63 of the second circuit board 6 is inserted in the first positioning hole 42 on the first circuit board 4, and the insertion portion 63 is electrically connected to the first circuit board 4. Further, the first positioning portion 14 is connected to the hole wall of the second positioning hole 41, so that the detection shell 1 is firmly connected to the first circuit board 4;
S4. installing the detection shell 1 as well as the light source module 2, the mounting cup 6', the detection probe 3, the first circuit board 4, and the second circuit board 6 in the housing 7 as a whole assembly.

### Embodiment 4

Currently, the detection device 9 of the conventional detection device includes a first circuit board 4 and a detection shell 1. The detection shell 1 defines an optical gas chamber 5, and the first circuit board 4 and the detection shell 1 are typically connected by adhesive, which has a poor connection strength.

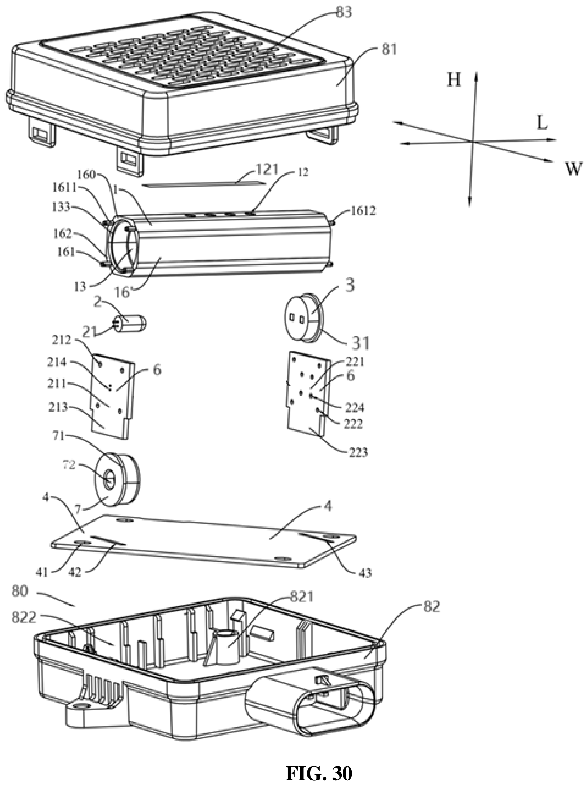

In order to improve a connection strength between the first circuit board 4 and the detection shell 1, a detection device 8 is provided in the present application. As shown in FIG. 29 and FIG. 30, the detection device 8 includes a light source module 2, a detection shell 1, a first circuit board 4, and a detection probe 3. At least one of the light source module 2 and the detection probe 3 is electrically connected to the second circuit board 6. The detection shell 1 defines an optical gas chamber 5, the light source module 2 is partially located in the optical gas chamber 5, and the detection probe 3 is partially located in the optical gas chamber 5. The detection shell 1 defines multiple first vent holes 12. The multiple first vent holes 12 are in gaseous communication with the outside of the detection device 8 and with the optical gas chamber 5.

Specifically, the detection shell 1 includes an inner surface 15' and an outer surface 16', and the outer surface 16' is arranged far from the optical gas chamber 5 relative to the inner surface 15'. In the present application, the detection shell 1 further includes a positioning portion 161, which protrudes from the outer surface 16 in a direction away from the optical gas chamber 5. Further, the first sub circuit board 210 defines a first positioning hole 212. The positioning portion 161 is connected to the hole wall corresponding to the first positioning hole 212. That is, the detection shell 1 is connected to the hole wall corresponding to the first positioning hole 212 through the positioning portion 161. In the present application, the detection shell 1 is connected to the second circuit board 6 through the positioning portion 161, which can improve a connection strength between the detection shell 1 and the second circuit board 6. Further, the positioning portion 161 is provided to avoid a relative movement between the detection shell 1 and the second circuit board 6, especially under external loads such as external forces, vibrations, etc.

Referring to FIG. 30, the detection shell 1 has a length direction L, a transverse direction W, and a height direction H. In some embodiments, referring to FIG. 30, the outer surface 16' includes an end surface 160, which is located at one end in the length direction L. In the length direction L, the positioning portion 161 protrudes from the end surface 160 in a direction away from the optical gas chamber 5. The second circuit board 6 includes a first sub circuit board 210, and the light source module 2 or the detection probe 3 is electrically connected to the first sub circuit board 210. The light source module 2 or the detection probe 3 is directly connected to the first sub circuit board 210. The first sub circuit board 210 is located at one end of the detection shell 1 in the length direction L. The protruding direction of the positioning portion 161 intersects with the thickness direction of the first sub circuit board 210, which can further maintain the positional relationship between the positioning portion 161 and the second circuit board 6 and increase the connection strength there between.

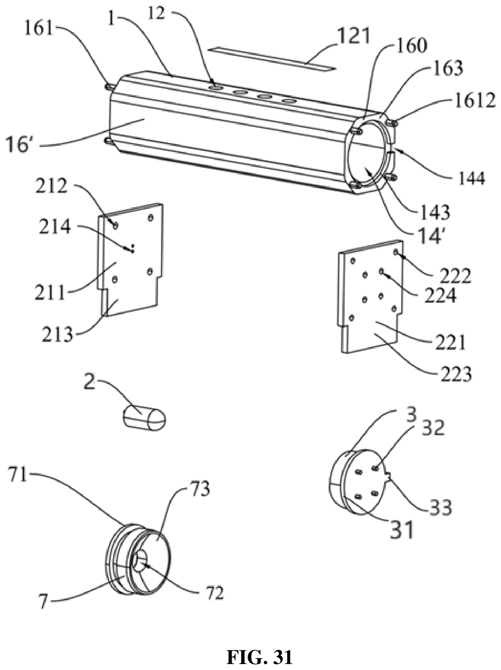

Further, referring to FIG. 30 and FIG. 31, in some embodiments, the end surface 160 includes a first end surface 162 and a second end surface 163, which are located at two opposite ends of the detection shell 1 in the length direction L, respectively. The positioning portion 161 includes a first positioning portion 1611 and a second positioning portion 1612, which protrude from the first end surface 162 and the second end surface 163 in a direction away from the optical gas chamber 5, respectively. The second circuit board 6 includes a first sub circuit board 211 and a second sub circuit board 221. The first sub circuit board 211 is perpendicular to the length direction L and is arranged facing the first end surface 162. The second sub circuit board 221 is perpendicular to the length direction L and is arranged facing the second end surface 163. In some embodiments, in order to further improve the connection strength between the circuit board 2 and the detection shell 1, the first sub circuit board 211 is arranged perpendicular to the first positioning portion 1611, and the second sub circuit board 221 is arranged perpendicular to the second positioning portion 1612. The perpendicular arrangement can withstand external loads to the maximum extent so as to prevent a relative movement between the second circuit board 6 and the positioning portion 161.

The detection device 8 includes a first circuit board 4, and the first sub circuit board 211 and the second sub circuit board 221 are respectively electrically and physically connected to the first circuit board 4. The first circuit board 4 defines a fourth positioning hole 42 and a fifth positioning hole 43. The first sub circuit board 211 has a first insertion portion 213, and the second sub circuit board 221 has a second insertion portion 223. Specifically, each of the first insertion portion 213 and the second insertion portion 223 has a rectangular or elliptical insertion portion, which has, for example, a cylindrical shape. The first insertion portion 213 is integrated with the first sub circuit board 211, and the second insertion portion 223 is integrated with the second sub circuit board 221. The first insertion portion 213 and the second insertion portion 223 are respectively electrically and physically connected to the second circuit board 4. Further, the first insertion portion 213 is at least partially located in the fourth positioning hole 42, and the first insertion portion 213 is connected to the hole wall forming the fourth positioning hole 42. The second insertion portion 223 is at least partially located in the fifth positioning hole 43, and the second insertion portion 223 is connected to the hole wall forming the fifth positioning hole 43. The connection specifically includes a fixed connection or a position-limited connection, where the fixed connection includes a connection in manner of weld or nut or adhesive, and the position-limited connection may be a positioning-stud connection.

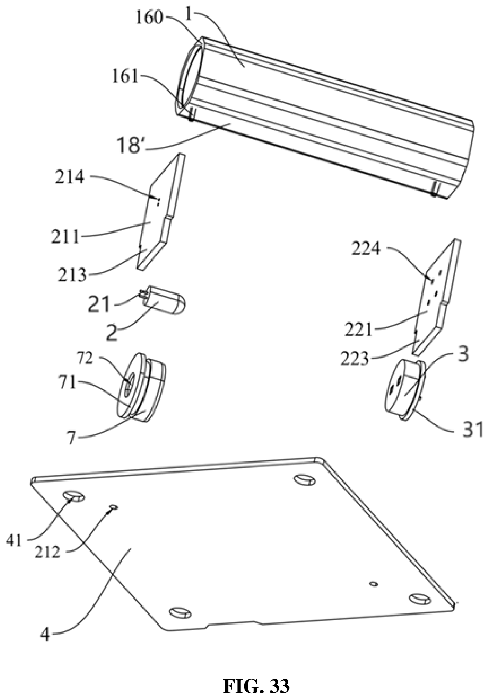

In other embodiments, as shown in FIG. 33, the outer surface 16' has a bottom surface 18', which is arranged facing the multiple first vent holes 12. The positioning portion 161 is located on the bottom surface 18' and protrudes from the bottom surface 18' in a direction away from the optical gas chamber 5. The light source module 2 and the detection probe 3 are both electrically connected to the first circuit board 4. The first circuit board 4 is parallel to the length direction L and arranged facing the bottom surface 18'. The protruding direction of the positioning portion 161 intersects with the thickness direction of the first circuit board 4, so that the first circuit board 4 is fixed to the detection shell 1 through the positioning portion 161, which improves the connection strength between the first circuit board 4 and the detection shell 1.

In some embodiments, as shown in FIG. 30, the detection shell 1 has two or more positioning portions 161, which are symmetrically distributed to improve the connection stability between the second circuit board 6 and the detection shell 1. For example, as shown in FIG. 21, the detection shell 1 includes four first positioning portions 1611, which are symmetrically arranged about the axis of the shell. In other embodiments, the detection shell 1 may also include three, five, or other numbers of positioning portions 161, as long as the positioning portions 161 are symmetrically arranged. As such, each cylindrical positioning portion 161 is subjected to uniform force, which improves the service life of the cylindrical positioning portion 161.

In some embodiments, the positioning portion 161 is elongated, and the positioning portion 161 is cylindrical, strip, or conical. The positioning portion 161 has a cross section in a circular, triangular, quadrilateral, or other polygonal shape. For example, as shown in FIG. 31, the positioning portion 161 has a cylindrical structure. In the present application, the specific shape of the positioning portion 161 is not limited, as long as the positioning portion 161 can be inserted into the first positioning hole 212 of the circuit board 2, so that the detection shell 1 is connected to the circuit board through the positioning portion 161.

In some embodiments, the positioning portion 161 is at least partially located in the first positioning hole 212, and the positioning portion 161 is connected to the hole wall corresponding to the first positioning hole 212 in a fixed or position-limited manner. For example, the positioning portion 161 is in interference fit with the hole wall corresponding to the first positioning hole 212, or the positioning portion 161 is bonded to the hole wall corresponding to the first positioning hole 212 by adhesive, or the positioning portion 161 is welded to the hole wall corresponding to the first positioning hole 212.

In some embodiments, as shown in FIG. 31, in order to fix the light source module 2 more firmly, the detection device 8 includes a mounting cup 7, which defines a third through hole 72. The light source module 2 is at least partially located in the third through hole 72, and the mounting cup 7 is at least partially located on the periphery of the optical gas chamber 5.

Further, in some embodiments, as shown in FIG. 30, the detection shell 1 defines a first through hole 13 and a first hole groove 133. The first through hole 13 extends through the detection shell 1 in the transverse direction W and is connected to the optical gas chamber 5. The first through hole 13 and the first hole groove 133 are coaxially arranged, and the first through hole 13 is in communication with the first hole groove 133. The mounting cup 7 is at least partially located in the first hole groove 133. The mounting cup 7 has a second step portion 71, which protrudes from the mounting cup 7 in a direction away from the optical gas chamber 5. The second step portion 71 is connected to the wall of the first hole groove 133. Specifically, the connection may be in a manner of sealing ring or sealant. The second step portion 71 is used to limit the relative position of the mounting cup 7 to the first through hole 13, which facilitates installation of the mounting cup 7 with the detection shell 1.

In some embodiments, the light source module 2 includes a first pin 21. As shown in FIG. 30, the light source module 2 has two first pins 21, where the first pins 21 are elongated or cylindrical. The first sub circuit board 211 defines a first corner hole 214, and the first pin 21 is connected to the wall of the first corner hole 214. The light source module 2 is connected to the first sub circuit board 211 through the first pins 21. Specifically, the connection may be a fixed connection or a position-limited connection. In order to improve the detection precision of the detection device 8, in some embodiments, as shown in FIG. 22, the mounting cup 7 has a reflective surface 73, which is the first reflective surface 11 in the above embodiments. The reflective surface 73 is arranged facing the optical gas chamber 5 and is arc-shaped. Further, the focal point or the center point of the reflective surface 73 coincides with the receiving surface of the detection probe 3, which is used to converge light and directly reflect light to the detection probe 3, which reduces the reflection times of light in the optical gas chamber 5 and thus reduces light loss. Further, the reflective surface 73 may be applied with a gold coating to increase the reflectivity.

In order to fix the detection probe 3 more firmly, in some embodiments, the detection probe 3 includes a second pin 32. As shown in FIG. 31 the detection probe 3 has four second pins 32, and each second pin 32 is of a bar or cylindrical shape. The second sub circuit board 221 defines a second corner hole 224, and the detection probe 3 is connected to the second sub circuit board 221. The detection probe 3 is connected to the second sub circuit board 221 through the second pin 32 and the hole wall of the second corner hole 224. The connection may be a fixed connection or a position-limited connection. For example, the second pin 32 is in interference fit with the hole wall corresponding to the second corner hole 224, or the second pin 32 is bonded with the hole wall corresponding to the second corner hole 224 by adhesive, or the second pin 32 is welded to the hole wall corresponding to the second corner hole 224.

In order to further limit the relative position of the detection probe 3 to the detection shell 1, in some embodiments, as shown in FIG. 31, the detection probe 3 has a first step portion 31, which protrudes from the detection probe 3 in a direction away from the optical gas chamber 5. The detection shell 1 defines a second through hole 14' and a second hole groove 143. The second through hole 14' extends through the detection shell 1 in the transverse direction W, and the second through hole 14' is in communication with the optical gas chamber 5. The second through hole 14' and the second hole groove 143 are coaxially arranged, and the second through hole 14' is in communication with the second hole groove 143. The detection probe 3 is at least partially located in the second hole groove 143. The first step portion 31 is connected to the hole wall of the second hole groove 143. Specifically, the connection may be a connection in a manner of sealing ring or sealant or a connection in manner of interference fitting or a threaded connection.

Further, in order to prevent the detection probe 3 from rotating in the second through hole 14', in some embodiments, as shown in FIG. 31, the second end surface 163 defines a notch 144, which is recessed from the groove side wall of the second hole groove 143 in a direction away from the second hole groove 143. The notch 144 is in communication with the second hole groove 143, and the first step portion 31 further has a protrusion 33, which protrudes from the side wall of the first step portion 31 in a direction away from the first step portion 31. The protrusion 33 is at least partially located in the notch 144, and the protrusion 33 cooperates with the notch 144.

In order to prevent the detection device 8 from being affected and damaged by the external environment during detection, in some embodiments, the detection device 8 includes a housing 7, which is used to protect the detection device 8. Further, as shown in FIG. 30, the housing 7 includes a first housing 71 and a second housing 72. The first housing 71 and the second housing 72 are arranged in the height direction H, and the first housing 71 and the second housing 72 are connected. Specifically, the first housing 71 and the second housing 72 are connected by adhesive or snap fitting.

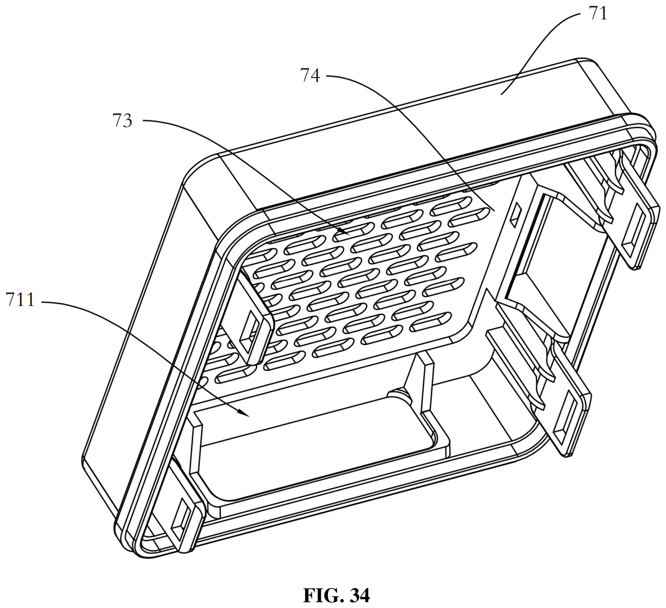

Further, in some embodiments, as shown in FIG. 30 and FIG. 34, the second housing 72 has multiple third positioning portions 721, the first circuit board 4 defines multiple third positioning holes 41, and the third positioning portions 721 cooperates with the third positioning holes 41 to fix the first circuit board 4. The second housing 72 defines a second inner chamber 722, and the first circuit board 4 is located in the second inner chamber 722. Specifically, four third positioning portions 721 and four third positioning holes 41 are preferable. In some embodiments, the first housing 71 defines a first inner chamber 711 and a top surface 74. The first inner chamber 711 is in communication with the second inner chamber 722, and the first inner chamber 711 and the second inner chamber 722 together form an inner chamber 70. The top surface 74 is arranged far from the first circuit board 4 relative to the first inner chamber 711. The top surface 74 defines multiple second vent holes 73, which are in gaseous communication with the first inner chamber 711 and with the outside of the detection device 8.

The principle of the detection device 8 is explained as follows: different gases have their own absorption spectra due to differences in their molecular structure, concentration, and energy distribution. When a target gas is detected, the absorption for lights at specific wavelengths by the target gas follows Lambert Beer's law. Taking light source module 2 of an infrared light source as an example, when the light source module 2 emits an infrared beam that passes through optical gas chamber 5 and reaches detection probe 3, the target gas absorbs the infrared light at a specific wavelength. That is, the target gas leaked from the outside can enter the inner chamber 70 through the structure of second vent holes 73 of the housing 7, and then enter the optical gas chamber 5 through the first vent holes 12 on the detection shell 1. The target gas entering the optical gas chamber 5 can absorb the infrared light at the specific wavelength. As such, the detection probe 3 can calculate the concentration and other information of the target gas by detecting variation in light intensity.

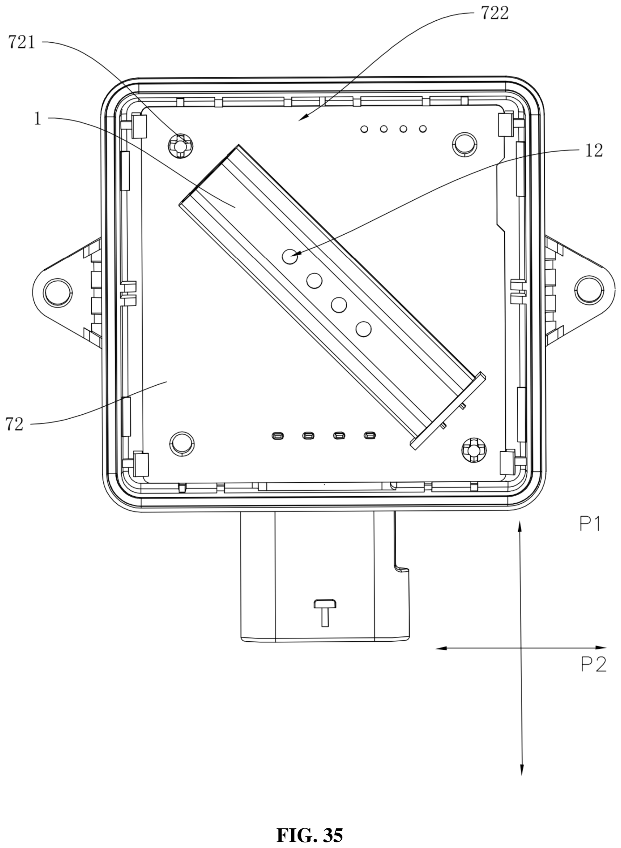

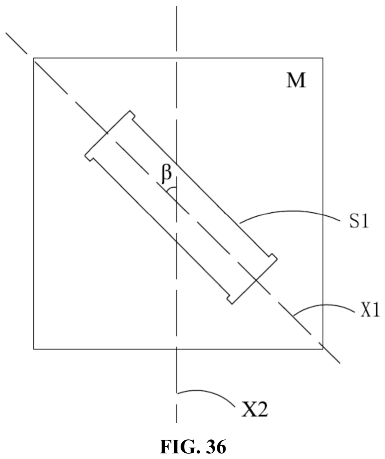

In order to improve the detection precision of the detection device 8, in some embodiments, referring to FIG. 35, the cylindrical detection shell 1 needs to have a certain length. In order to achieve a relative long length of the detection shell 1 in a limited space, in the present application, referring to FIG. 36, a first straight line X1 and a second straight line X2 are defined on a first plane M perpendicular to the height direction H of the detection device 8. The detection shell 1 has a first projection S1 on this plane, and the first straight line X1 extends in the length direction of the first projection S1. The second straight line X2 extends in the width or length direction of the detection device 8. As shown in FIG. 36, the width direction of the detection device 8 may refer to the direction P2, and the length direction of the detection device 8 may refer to the direction P1. The second straight line X2 has the same extension direction as the centerline of the detection device 8 in the width direction. The first straight line X1 is oblique at an acute angle β relative to the second straight line X2, which is beneficial for expanding the installation space of the detection shell 1 and is further beneficial for increasing the distance between the light source module 2 and the detection probe 3. As such, the infrared light can be absorbed by the gas more fully through a long optical path, which is beneficial for improving the detection precision of the detection device 8.

In order to further improve the detection precision of the detection device 8, the detection device 8 further includes a waterproof gas-permeable membrane 121, which is used to prevent impurities such as moisture or dust from entering the detection shell 1 and thus affecting the detection precision. In some embodiments, referring to FIG. 30, the detection shell 1 defines first vent holes 12, which are in gaseous communication with the optical gas chamber 5, and the first vent holes 12 are in gaseous communication with the inner chamber 70. At least a part of first vent holes 12 are arranged opposite to the second vent holes 73, and the waterproof gas-permeable membrane 121 is located between the first vent holes 12 and the second vent holes 73 and covers the first vent hole 12. The waterproof gas-permeable membrane 121 may be made of waterproof and gas-permeable porous materials coated topolyester fiber fabrics manufactured by specific processes, which has a pore size in the nanometer range. Therefore, the waterproof gas-permeable membrane 121 can have functions of waterproof, dustproof, and gas permeability. The waterproof gas-permeable membrane 121 is used to further extend the product's service life. The waterproof gas-permeable membrane 121 may cover the first vent holes 12 by pasting. Specifically, four first vent holes 12 are preferable, which are sequentially arranged on the detection shell 1 in the transverse direction W of the detection device 8.

A method for assembling the detection device 8 includes the following steps:
Installing the light source module 2 in the mounting cup 7 first, where the mounting cup 7 is installed in the first hole groove 133 and connected to the groove wall of the first hole groove 133;
Electrically connecting the light source module 2 to the first sub circuit board 211. the first positioning portion 1611 is applied with an adhesive, the first positioning portion 1611 on the detection shell 1 then passes through the first positioning hole 212 on the first sub circuit board 211, and the first sub circuit board 211 is connected to the detection shell 1 through the first positioning portion 1611; electrically connecting the detection probe 3 to the second sub circuit board 221, where the first step portion 31 of the detection probe 3 is placed in the second hole insertion hole 143, so that the protrusion 33 of the first step portion 31 is located at the notch 144, and the detection probe 3 is at least partially located in the second through hole 14', the second positioning portion 1612 is applied with an adhesive, and then the second positioning portion 1612 passes through the second positioning hole 222. The second sub circuit board 221 is connected to the detection shell 1 through the second positioning portion 1612. A connection strength between the detection shell 1 and the circuit board 2 is achieved;
Inserting the first insertion portion 213 of the first sub circuit board 211 into the fourth positioning hole 42 on the first circuit board 4, and the first insertion portion 213 is electrically connected to the first circuit board 4. Further, the second insertion portion 223 of the second sub circuit board 221 is inserted into the fifth positioning hole 43 on the first circuit board 4, and the second insertion portion 223 is electrically connected to the first circuit board 4. The first sub circuit board 211 is electrically connected to the first circuit board 4 through the first insertion portion 213, and the second sub circuit board 221 is electrically connected to the first circuit board 4 through the second insertion portion 223;
Installing the detection shell 1 as well as the light source module 2, the mounting cup 7, the detection probe 3, the first sub circuit board 211, the second sub circuit board 221 and the first circuit board 4 inside the housing 1 as a whole assembly, which makes the installation more convenient.

In the progress for replacing traditional refrigerants with environmentally friendly refrigerants, it is found in the industry that some environmentally friendly refrigerants are flammable compared to traditional refrigerants, which poses a safety hazard to the air conditioning system. Therefore, a detection device for detecting gas concentration is needed to detect whether the refrigerant leaks, so that the air conditioning control system can conduct a shut-down action and sound the alarm to lower the safety hazards caused by environmentally friendly refrigerants.

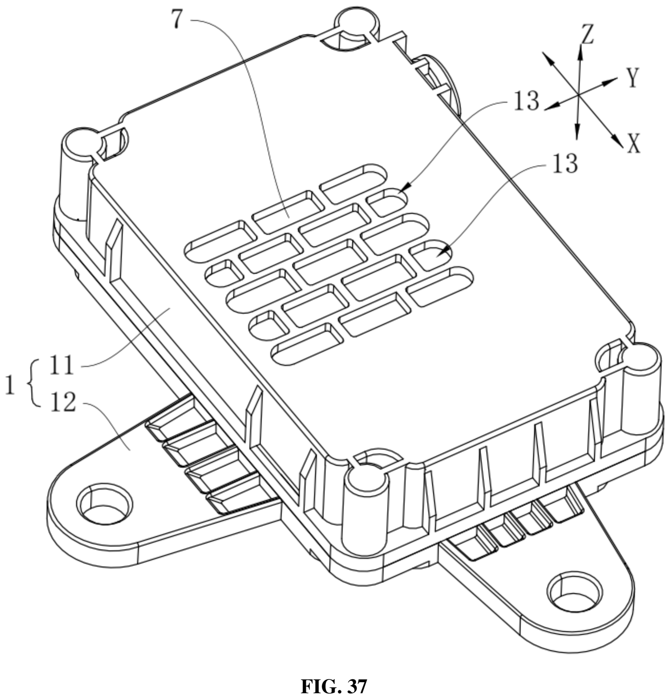

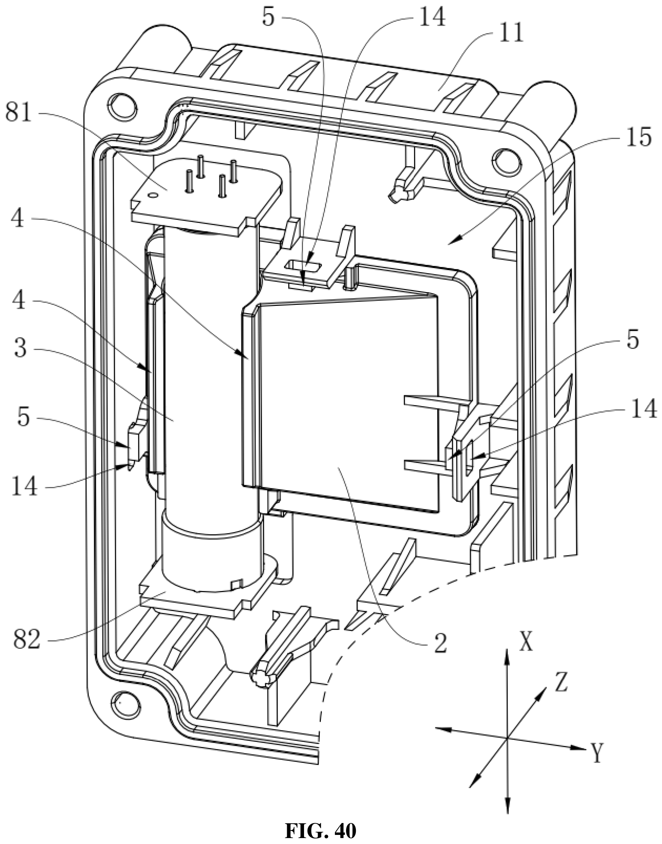

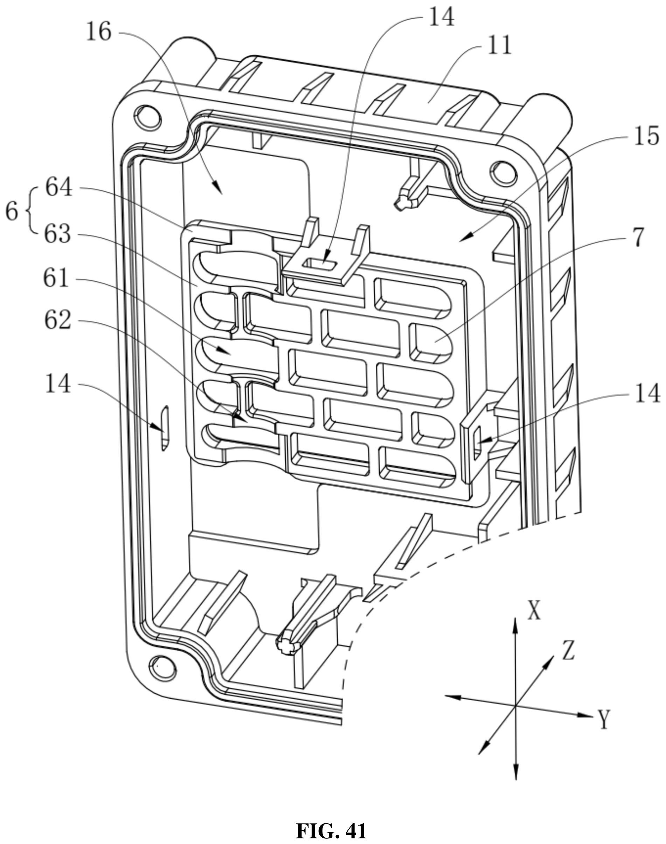

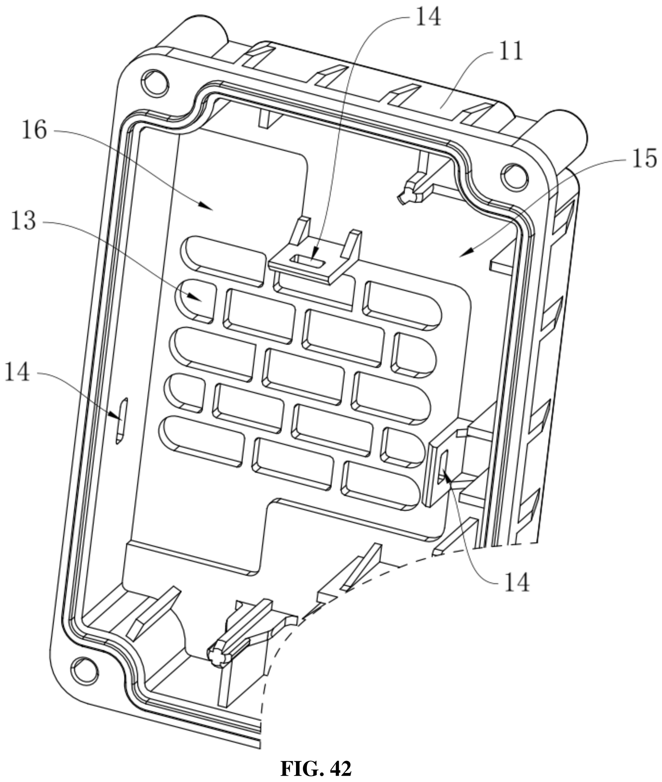

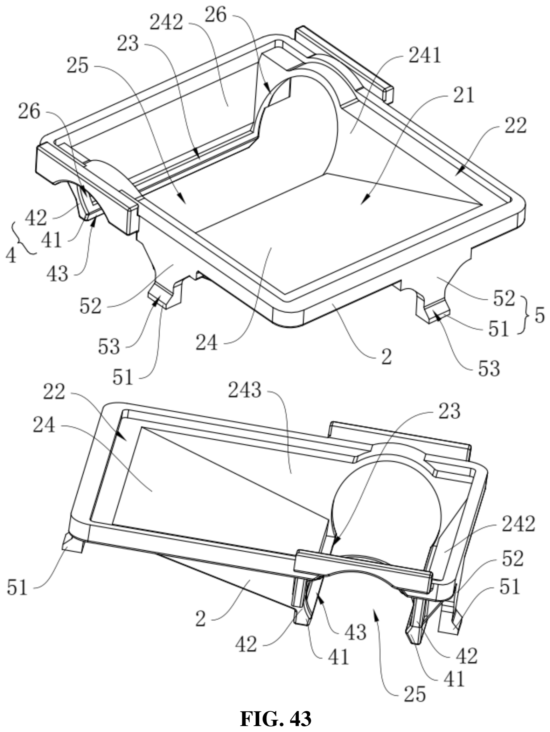

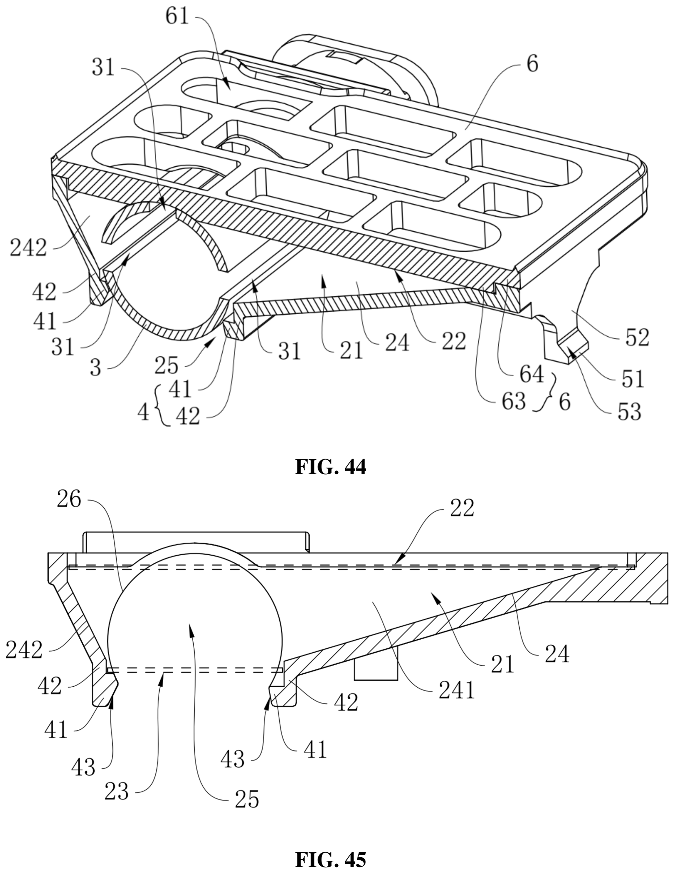

As shown in FIG. 37 to FIG. 46, a gas detection device is shown in accordance with the present application, which includes: a housing 1, a shell part 3, a first circuit board 8, and an electronic component 83. The housing 1 defines at least one first communication hole 13 and an inner chamber 15. The at least one first communication hole 13 extends through the housing 1. The electronic component 83 is connected to the first circuit board 8, and the shell part 3 is connected to the first circuit board 8. The electronic component 83, the first circuit board 8, and the shell part 3 are all located in the inner chamber 15.

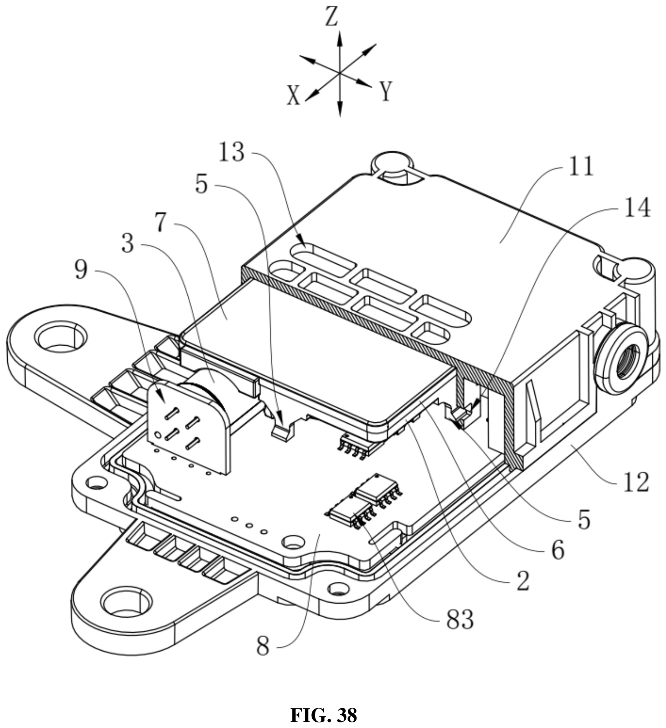

Referring to FIG. 37 and FIG. 38, a direction parallel to the length direction of the housing 1 is defined as a longitudinal direction X, a direction parallel to the width direction of the housing 1 is defined as a transverse direction Y, and a direction parallel to the height direction of the gas detection device is defined as a vertical direction Z.

In some embodiments, referring to FIG. 37 and FIG. 38, the housing 1 includes an upper housing 11 and a lower housing 12 that are connected with each other. Specifically, the upper housing 11 may be connected to the lower housing 12 in one or more manners including bonding, screwing, and snap fitting.

Referring to FIG. 37 and FIG. 38, the upper housing 11 and the lower housing 12 are arranged in the vertical direction Z. Both the upper housing 11 and the lower housing 12 are located on the periphery of the inner chamber 15. The upper housing 11 defines at least one first communication hole 13, and the at least one first communication hole 13 extend through the upper housing 11 and are in communication with the outside of the gas detection device. The gas detection device includes a blocking part 2, an abutting part 6, and a waterproof gas-permeable membrane 7. The waterproof gas-permeable membrane 7 is located between the at least one first communication hole 13 and the abutting part 6, and the abutting part 6 is sealedly connected to the upper housing 11. The waterproof gas-permeable membrane 7 is sandwiched between the abutting part 6 and the housing 1, and specifically, the abutting part 6 is connected to the upper housing 11 by ultrasonic welding, bonding, or snap fitting.

In some embodiments, referring to FIG. 33 and FIG. 34, the housing 1 defines a second groove 16, and the at least one first communication hole 13 is arranged opposite to the second groove 16. The second groove 16 is recessed from the wall of the inner chamber 15 towards the outside of the housing 1. Specifically, the second groove 16 is formed on the upper housing 11, and recessed from the wall of the inner chamber 15 towards the outside of the housing 1.

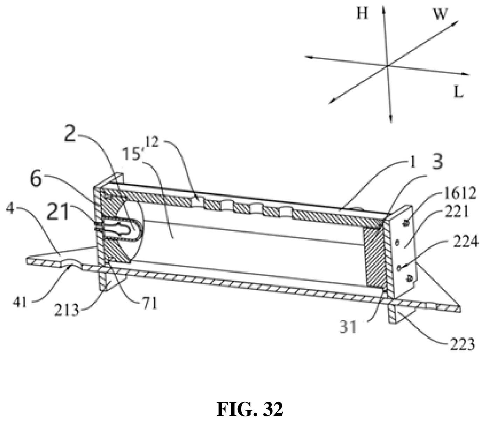

Referring to FIG. 32 and FIG. 33, the abutting part 6 and the waterproof gas-permeable membrane 7 are both located in the inner chamber 15. The abutting part 6 defines multiple third communication holes 61, and the multiple third communication holes 61 are arranged opposite to the at least one first communication hole 13. The waterproof gas-permeable membrane 7 completely covers the multiple third communication holes 61 and the at least one first communication hole 13. Specifically, multiple third communication holes 61 are in one-to-one correspondence with the at least one first communication hole 13, and the at least one first communication hole 13 is in gaseous communication with the multiple third communication holes 61. The orthographic projections of the at least one first communication hole 13 and the third communication holes 61 are all positioned within the waterproof gas-permeable membrane 7.

In some embodiments, referring to FIG. 32 and FIG. 33, the abutting part 6 includes an embedded part 63 and a support part 64. The embedded part 63 and the support part 64 are arranged in the vertical direction Z, and the embedded part 63 and the support part 64 are integral formed. The support part 64 is located between the waterproof gas-permeable membrane 7 and the embedded part 63, and the support part 64 is at least partially located in the second groove 16. The support part 64 is sealedly connected to the upper housing 11. Specifically, the support part 64 is sealedly connected to the upper housing 11 by ultrasonic welding or bonding.

When welding the abutting part 6 to the upper housing 11, the support part 64 of the resistance part 6 is first placed on the second groove 16, so that the abutting part 6 is hardly moved during welding, and the resistance part 6 is then welded to the upper housing 11 by ultrasonic welding, which facilitates the welding operation.

Referring to FIG. 31 and FIG. 32, the blocking part 2 is located in the inner chamber 15 and connected to the housing 1. Specifically, the blocking part 2 is connected to the upper housing 1, and the at least one first communication hole 13, the waterproof gas-permeable membrane 7, the abutting part 6, and the blocking part 2 are sequentially arranged from top to bottom in the vertical direction Z.

Referring to FIG. 32, FIG. 33, and FIG. 35, the housing 1 defines a first groove 14. Specifically, the upper housing 11 defines a first groove 14, which is located on the periphery of the blocking part 2. The blocking part 2 is provided with a second projecting part 5, which includes a second clamping portion 51 and a second deformable portion 52. The second deformable portion 52 is connected to the blocking part 2, and the second deformable portion 52 extends downward from the blocking part 2 in the vertical direction. The second clamping portion 51 is connected to the second deformable portion 52, and the second clamping portion 51 extends from the second deformable portion 52 towards the first groove 14.

Specifically, referring to FIG. 32, FIG. 32, and FIG. 35, the second deformable portion 52 and the blocking part 2 are integrally formed, and the second clamping portion 51 and the second deformable portion 52 are integrally formed. The second deformable portion 52, the blocking part 2, and the second clamping portion 51 are all made of plastic, and the second clamping portion 51 is at least partially located in the first groove 14. The second clamping portion 51 has a second guide surface 53, which is inclined relative to the vertical direction Z, and the highest portion of the second guide surface 53 is positioned closer to the second deformable portion 52 than the lowest portion of the second guide surface 53.

When installing the blocking part 2 in the upper housing 11, the second guide surface 53 abuts with the upper housing 1, which causes the second deformable portion 52 to deform. When the second clamping portion 51 is arranged to cooperate with the first groove 14, the second deformable portion 52 is restored, and the second clamping portion 51 is at least partially located in the first groove 14, so that the blocking part 2 and the upper housing 11 are connected with each other in a manner of snap fitting.

Referring to FIG. 35, FIG. 36, and FIG. 37, the blocking part 2 defines a diffusion chamber 21, a gas inlet 22, and a bottom opening 23. The gas inlet 22, the diffusion chamber 21, and the bottom opening 23 are sequentially arranged from top to bottom in the vertical direction Z. The diffusion chamber 21 extends through the blocking part 2 and is in communication with the gas inlet 22. The gas inlet 22, the diffusion chamber 21, and the bottom opening 23 are arranged corresponding to each other. The gas inlet 22 is positioned adjacent to the third communication hole 61 relative to the bottom opening 23, and the third communication hole 61 is in communication with the diffusion chamber 21 through the gas inlet 22. A flow area of the gas inlet 22 is greater than that of the bottom opening 23.

Specifically, referring to FIG. 35, FIG. 36, and FIG. 37, the blocking part 2 has a first inclined surface 24, which is inclined relative to the vertical direction Z. The first inclined surface 24 is located on the periphery of the diffusion chamber 21 and is located between the gas inlet 22 and the bottom opening 23.

In some embodiments, referring to FIG. 35, FIG. 36, and FIG. 37, the blocking part 2 has a second inclined surface 241, a third inclined surface 242, and a fourth inclined surface 243. The second inclined surface 241, the third inclined surface 242, and the fourth inclined surface 243 are all located on the periphery of the diffusion chamber 21. The second inclined surface 241, the third inclined surface 242, and the fourth inclined surface 243 are all inclined relative to the vertical direction Z. The diffusion chamber 21 is formed by enclosing the first inclined surface 24, the second inclined surface 241, the third inclined surface 242, and the fourth inclined surface 243. The flow area of the diffusion chamber 21 gradually decreases from the top to bottom in the vertical direction Z, and the embedded part 63 is at least partially located at the gas inlet 22. In some embodiments, the first inclined surface 24, the second inclined surface 241, the third inclined surface 242, and the fourth inclined surface 243 may be flat, concave, convex, wavy, serrated, or stepped surface.

The shell part 3 defines a detection chamber 32 and second communication holes 31. The second communication holes 31 are in communication with the detection chamber 32 and in communication with the bottom opening 23.

In one aspect, the flow area of the gas inlet 22 is greater than that of the bottom opening 23, and the gas to be detected can flow into the diffusion chamber 21 as much as possible through the gas inlet 22. In another aspect, the gas to be detected flowing through the gas inlet 22 is guided by the first inclined surface 24, the second inclined surface 241, the third inclined surface 242, and the fourth inclined surface 243, so that the gas to be detected flows into the detection chamber 32 of the shell part 3 as much as possible for detection, which increases the response speed of the gas detection device.

In some embodiments, referring to FIG. 36 and FIG. 37, the blocking part 2 defines a concave groove 25, which is concave from a side of the blocking part 2 opposite to the at least one first communication hole 13 towards an interior of the diffusion chamber 21. The concave groove 25 is in communication with the bottom opening 23, and the blocking part 2 is provided with a first projecting part 4 and a blocking wall 26. The blocking wall 26 and the first projecting part 4 are located on two opposite sides of the concave groove 25 in the vertical direction Z, respectively, and the shell part 3 is at least partially located in the concave groove 25. Specifically, the first projecting part 4 includes a first clamping portion 41 and a first deformable portion 42. The first deformable portion 42 is located on the side of the blocking part 2 opposite to the third communication hole 61. The first deformable portion 42 is connected to the blocking part 2, and the first clamping part 41 is connected to the first deformable portion 42. The first clamping part 41 extends from the first deformable portion 42 towards the concave groove 25. The first clamping part 41 has a first guide surface 43, which is inclined relative to the vertical direction Z. The highest portion of the first guide surface 43 is positioned adjacent to the concave groove 25 than the lowest portion of the first guide surface 43.

Specifically, the first deformable portion 42, the first clamping part 41, and the blocking part 2 are all integrated pieces and are all made of plastic. In some embodiments, the first clamping part 41 and the first deformable portion 42 are both elongated, which extend in the longitudinal direction X. The first deformable portion 42 is connected to the blocking wall 26.

Referring to FIG. 36 and FIG. 37, the blocking wall 26 and the first clamping portion 41 are sequentially arranged from top to bottom in the vertical direction Z, and the blocking wall 26 and the first clamping portion 41 are located on the upper and lower sides of the recessed groove 25, respectively. At least part of blocking wall 26 is in contact with the housing 1, and at least part of the first clamping portion 41 is in contact with the housing 1. Specifically, the blocking wall 26 is arc-shaped, and the shell part 3 is cylindrical. The blocking wall 26 and the first clamping part 41 together form a space that limits the shell part 3.

When installing the shell part 3 on the blocking part 2, the shell part 3 abuts against the first guide surface 43 on the first clamping part 41. The first deformable portion 42 is deformed more easily by the first guide surface 43, so that the first clamping part 41 is moved in a direction away from the recessed groove 25. When the shell part 3 comes into contact with the blocking wall 26, the first clamping part 41 returns to its original position under the restoring action of the first deformable portion 42, and thus at least a part of the first clamping part 41 is located on the side of the shell part 3 away from the at least one first communication hole 13, and the shell part 3 is limited by the first clamping part 41 and the blocking wall 26.

In some embodiments, referring to FIG. 36 and FIG. 37, the shell part 3 is at least partially located in the recessed groove 25, and the abutting part 6 is recessed towards the diffusion chamber 21 to form a position-limited groove 62 (shown in FIG. 33). The position-limited groove 62 cooperates with the shell part 3, and the shell part 3 is at least partially located in the position-limited groove 62. At least part of side wall of the shell part 3 is in contact with the groove wall of the position-limited groove 62. The second communication hole 31 is at least partially located in the position-limited groove 62, and the position-limited groove 62 is at least partially in communication with the third communication hole 61. Specifically, three second communication holes 31 are formed, which are evenly distributed in the circumferential direction around the axis of the shell part 3. One second communication hole 31 is at least partially in communication with the position-limited groove 62, and the other two second communication holes 31 are both in communication with the diffusion chamber 21. Further, said other two second communication holes 31 are at least partially located at the bottom opening 23 and in communication with the bottom opening 23.

The position-limited groove 62 can improve the installation strength of the shell part 3 on the blocking part 2 and reduce the movement of the shell part 3. Due to the fact that at least part of the second communication hole 31 is located in the position-limited groove 62, a part of the gas to be detected can flow in the detection chamber 32 through the at least one first communication hole 13, the waterproof gas-permeable membrane 7, the third communication hole 61, the position-limited groove 62, and the second communication hole 31 for detection. The other part of the gas to be detected is guided by the first inclined surface 24, the second inclined surface 241, the third inclined surface 242, and the fourth inclined surface 243 to flow in the detection chamber 32 through the other part of second communication hole 31 for detection. The flow rate of the gas entering the diffusion chamber 21 is increased under a convergence effect of the first inclined surface 24, the second inclined surface 241, the third inclined surface 242, and the fourth inclined surface 243, which further decrease the response time.

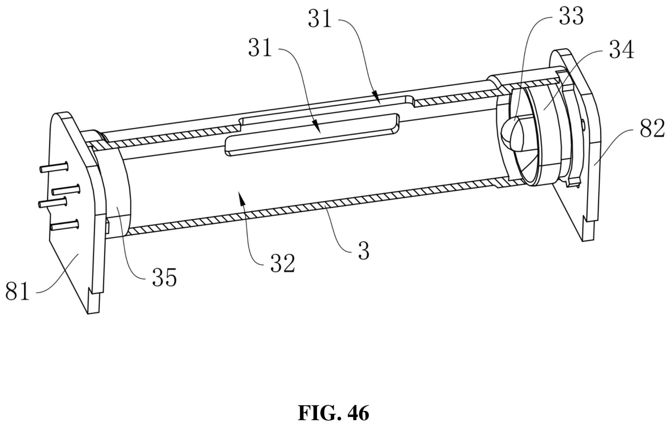

In some embodiments, referring to FIG. 31 and FIG. 46, the length direction of the shell part 3 is parallel to the longitudinal direction X, and the detection chamber 32 extends through the shell part 3 in the longitudinal direction X. The gas detection device includes a detection assembly 9, which includes a light source module 33, a reflection cup 34, a detection probe 35, a second circuit board 81, and a third circuit board 82. The second circuit board 81 and the third circuit board 82 are arranged in the longitudinal direction X and are located on two opposite sides of the shell part 3, respectively. Both the second circuit board 81 and the third circuit board 82 are sealedly connected to the shell part 3.

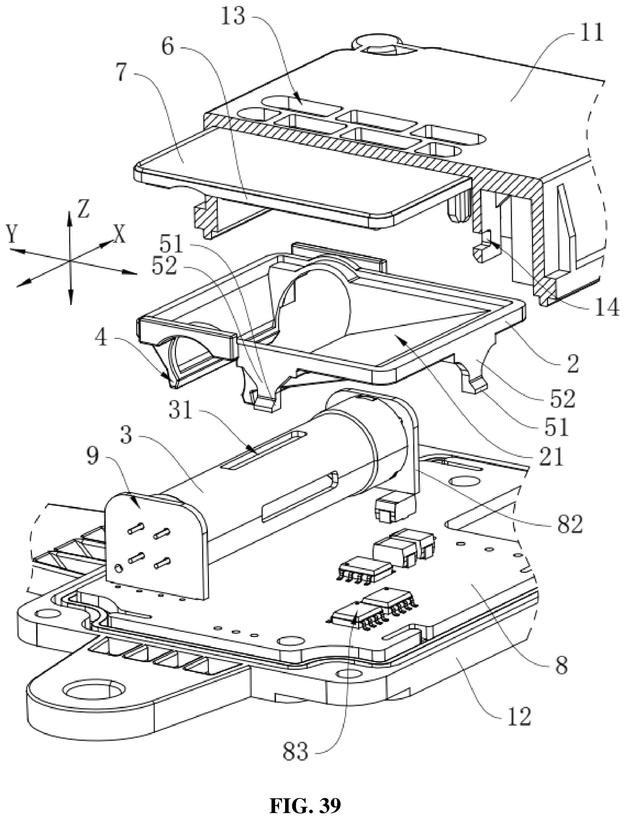

Referring to FIG. 39 and FIG. 46, the detection probe 35 is at least partially located in the detection chamber 32. The detection probe 35 is electrically connected to the second circuit board 81, and the second circuit board 81 is physically and electrically connected to the first circuit board 8. At least part of the light source 33 and at least part of the reflection cup 34 are located in the detection chamber 32. The light source 33 is located inside the reflection cup 34, and the reflection cup 34 is sealedly connected to the shell part 3. The light source 33 is electrically connected to the third circuit board 82, and the third circuit board 82 is electrically connected to the first circuit board 8.

The above embodiments are only used to illustrate the present application and not to limit the technical solution described in the present application. The understanding of the specification should be based on those skilled in the art, such as directional descriptions of "front", "back", "left", "right", "up", "down", etc., which are only used to describe the relationship between objects and are not substantial limitations. The term "multiple" refers to at least two or more.

Although this specification has provided detailed explanations of the present application with reference to the above embodiments, those skilled in the art should understand that those skilled in the art can still modify or equivalently replace the present application, and all technical solutions and improvements that do not depart from the spirit and scope of the present application should be covered within the scope of the claims of the present application.

## Claims

1. A gas sensor having a detection device, wherein the detection device comprises:
a detection shell;
a light source module;
a detection probe; and
a first circuit board, wherein
the detection shell defines an optical gas chamber;
the detection shell comprises a reflective surface, which is located on a periphery of the optical gas chamber, the detection shell defines a plurality of first vent holes, the plurality of first vent holes are in gaseous communication with an outside of the detection device, and the first vent holes are in gaseous communication with the optical gas chamber;
the light source module is at least partially located in the detection shell, at least one of the light source module and the detection probe is directly and electrically connected to the first circuit board, and the detection shell and the first circuit board are arranged in a height direction of the detection device; and
the detection probe is at least partially located inside the detection shell, the detection shell has a length direction, and the detection probe and the light source module are located on two opposite sides of the detection shell, respectively.

2. The gas sensor according to claim 1, wherein
the detection shell has a bottom wall portion, the bottom wall portion is positioned adjacent to the first circuit board, relative to the optical gas chamber, along the height direction of the detection device, the bottom wall portion defines a first through hole that extends through the detection shell, at least one of the light source module and the detection probe is located in the first through hole, and at least one of the light source module and the detection probe is connected to a hole wall of the first through hole.

3. The gas sensor according to claim 2, wherein
one of the light source module and the detection probe is at least partially located in the first through hole and is connected to the hole wall of the first through hole;
the detection shell defines a second through hole in a length direction of the detection shell, the other one of the light source module and the detection probe is at least partially located in the second through hole and is connected to a hole wall of the second through hole; and
the detection device comprises a second circuit board, the second circuit board is located on a side of the detection shell in the length direction of the detection shell, the other one of the light source module and the detection probe is installed at the second circuit board and is electrically connected to the second circuit board, and the second circuit board is electrically connected to the first circuit board.

4. The gas sensor according to claim 3, wherein
the detection shell defines a first hole groove, the first hole groove is coaxially arranged with the second through hole, the detection shell defines a notch, the notch is in communication with the first hole groove;
the detection probe has a first step portion and a protrusion that are connected with each other, the first step portion is at least partially located in the first hole groove, the first step portion is connected to a hole wall of the first hole groove, the protrusion is at least partially located in the notch, and the protrusion cooperates with the notch; and
the first circuit board defines an insertion hole, the second circuit board has an insertion portion, the insertion portion is integrated with the second circuit board, the insertion portion is at least partially located in the insertion hole, and the insertion portion is connected to a hole wall forming the insertion hole.

5. The gas sensor according to claim 3, wherein
the first reflective surface is arc-shaped;
the detection shell comprises a first shell and a mounting part, the first reflective surface is provided on the mounting part, the detection shell defines a third through hole and a second hole groove, the third through hole extends through the detection shell, the third through hole is coaxially arranged with the second hole groove, the mounting part is at least partially located in the second hole groove, and the mounting part is connected to a wall of the second hole groove.

6. The gas sensor according to claim 2, wherein
the first through hole comprises a first sub through hole and a second sub through hole, the light source module is at least partially located in the first sub through hole, the detection probe is at least partially located in the second sub through hole, and the detection probe is connected to a hole wall of the second sub through hole in a position-limited manner;
the light source module is positioned adjacent to the first reflective surface, relative to the detection probe, along the length direction of the detection shell; and
the detection device comprises reflective layer, at least part of the first reflective surface is coated with the reflective layer, the reflective layer comprises at least one of an aluminum coating and a gold coating.

7. The gas sensor according to claim 6, wherein
the detection shell has a second reflective surface, and the second reflective surface is located on the periphery of the optical gas chamber;
the first reflective surface and the second reflective surface are located on two sides of the detection shell in the length direction of the detection shell, and the second reflective surface is arranged far from the light source module relative to the detection probe; and
at least part of the second reflective surface is coated with the reflective layer.

8. The gas sensor according to claim 6, wherein
the bottom wall portion comprises an upper surface, the upper surface is located on the periphery of the optical gas chamber, at least part of the reflective surface is coated with the reflective layer.

9. The gas sensor according to claim 8, wherein
the detection shell comprises a second shell and a base, the base has the bottom wall portion, the protrusion is provided on the base, the protrusion is positioned adjacent to the second reflective surface relative to the first reflective surface, or
the protrusion is positioned adjacent to the first reflective surface relative to the second reflective surface, the second shell has a first recess portion, and the protrusion cooperates with the first recess portion.

10. The gas sensor according to claim 1, wherein
a gap is present between the detection shell and the first circuit board; and
in a thickness direction of the first circuit board, a distance between the first circuit board and the detection shell is greater than or equal to 0.4mm and less than or equal to 0.7mm.

11. The gas sensor according to claim 10, wherein
the detection device comprises a second circuit board, and the second circuit board is electrically connected to the first circuit board;
at least one of the light source module and the detection probe is electrically connected to the second circuit board, and the second circuit board is connected to the detection shell in a fixed or position-limited manner; and
in the thickness direction of the first circuit board, a part of second circuit board and the detection shell are located at a same side of the first circuit board, the second circuit board is connected to the first circuit board in a fixed or position-limited manner, and the detection shell is indirectly connected to the first circuit board through the second circuit board.

12. The gas sensor according to claim 11, wherein
the light source module is electrically connected to the second circuit board, the detection probe is electrically and directly connected to the first circuit board, and the second circuit board is connected to the first circuit board by insertion; and
an included angle is formed between the second circuit board and the first circuit board, the optical gas chamber is at least partially located within a range of the included angle, and the included angle is greater than 0 degree.

13. A gas sensor having a detection device, wherein the detection device comprises:
a detection shell;
a light source module;
a detection probe; and
a circuit board, wherein
at least one of the light source module and the detection probe is electrically connected to the circuit board;
the detection shell defines an optical gas chamber, the optical gas chamber is in gaseous communication with an outside of the gas senor, and, the detection shell, the light source module, and the detection probe are all located on a periphery of the optical gas chamber, and, the detection probe and the light source module are located on two opposite sides in a length direction of the detection shell, respectively;
the detection shell comprises an inner surface, an outer surface, and a positioning portion, the outer surface is arranged far from the optical gas chamber relative to the inner surface, and the positioning portion protrudes from the outer surface in a direction away from the optical gas chamber; and
the circuit board defines a first positioning hole, the positioning portion is at least partially located in the first positioning hole, and the first positioning portion is connected to a hole wall corresponding to the first positioning hole in a fixed or position-limited manner.

14. The gas sensor according to claim 13, wherein
the detection shell defines a plurality of first vent holes, the plurality of first vent holes are in gaseous communication with an outside of the gas sensor, and the plurality of first vent holes are in gaseous communication with the optical gas chamber;
the outer surface comprises a bottom surface facing the plurality of first vent holes, the positioning portion is located on the bottom surface and protrudes from the bottom surface in a direction away from the optical gas chamber;
the circuit board is a first circuit board, both the light source module and the detection probe are electrically connected to the first circuit board, the detection shell has a length direction, the first circuit board is parallel to the length direction of the detection shell and arranged facing the bottom surface; and
a protruding direction of the positioning portion intersects with a thickness direction of the first circuit board.

15. The gas sensor according to claim 13, wherein
the outer surface comprises an end surface, the detection shell has a length direction, the end surface is located at one end in the length direction, and the positioning portion protrudes from the end surface away from the optical gas chamber in the length direction;
the circuit board is a second circuit board, the detection shell has a length direction, the second circuit board is located at one end of the detection shell, one of the light source module and the detection probe is electrically connected to the second circuit board and is connected to the second circuit board in a fixed or position-limited manner; and
a protruding direction of the positioning portion intersects with a thickness direction of the second circuit board.

16. The gas sensor according to claim 15, wherein
the end surface comprises a first end surface and a second end surface, which are located at two ends of the detection shell in the length direction of the detection shell, respectively;
the positioning portion comprises a first positioning portion and a second positioning portion, the first positioning portion and the second positioning portion protrude from the first end surface and the second end surface in a direction away from the optical gas chamber, respectively;
the second circuit board comprises a first sub circuit board and a second sub circuit board, the first sub circuit board is arranged perpendicular to the length direction and is arranged facing the first end surface, and the second sub circuit board is arranged perpendicular to the length direction and is arranged facing the second end surface; and
the first sub circuit board is arranged perpendicular to the first positioning portion, and the second sub circuit board is arranged perpendicular to the second positioning portion.

17. The gas sensor according to any one of claim 1 to 16, wherein
the detection device comprises a detection assembly and a shell part, the detection assembly comprises the light source module, the detection probe and the first circuit board, and the shell part comprises the detection shell;
the gas detection device further comprises a housing and a blocking part, the blocking part and the shell part are both located in the housing, the housing defines at least one first communication hole, the blocking part defines a diffusion chamber, the at least one first communication hole is in gaseous communication with the outside of the gas sensor, the at least one first communication hole is in communication with the diffusion chamber;
the shell part defines a plurality of second communication holes and a detection chamber, and the second communication holes are in communication with the detection chamber; and
the diffusion chamber defines a gas inlet and a bottom opening, the gas inlet is positioned adjacent to the at least one first communication hole, relative to the bottom opening, along a height direction of the gas sensor, a flow area of the gas inlet is greater than that of the bottom opening, at least a part of second communication holes are located at the bottom opening.

18. The gas sensor according to claim 17, wherein
the blocking part has a first inclined surface, the first inclined surface is inclined relative to the height direction of the gas sensor, the first inclined surface is located on a periphery of the diffusion chamber and is located between the gas inlet and the bottom opening.

19. The gas sensor according to claim 17, wherein
the shell part is connected to the blocking part in a fixed or position-limited manner, the blocking part defines a concave groove, and the concave groove is in communication with the bottom opening;
the blocking part has a first projecting part and a blocking wall, the blocking wall and at least part of the first projecting part are located on two sides of the concave groove in the height direction of the gas sensor, respectively, the shell part is at least partially located in the concave groove, and at least part of the first projecting part is in contact with the shell part.

20. The gas sensor according to claim 17, wherein
the blocking part is connected to the housing, the housing defines a first groove, the blocking part has a second projecting part;
the second projecting part comprises a second clamping portion and a second deformable portion, the second deformable portion is connected to the blocking part, the second clamping portion is connected to the second deformable portion, the second clamping portion and the second deformable portion are both located in the housing, and the second clamping portion is at least partially located in the first groove; and
the gas sensor comprises an abutting part and a waterproof gas-permeable membrane, the abutting part defines a plurality of third communication holes, the abutting part is at least partially located between the gas inlet and the at least one first communication hole, the waterproof gas-permeable membrane is sandwiched between the abutting part and the housing, the plurality of third communication holes are in communication with the at least one first communication hole, the gas-permeable membrane covers the plurality of third communication holes and the at least one first communication hole, and the abutting part is connected to the housing.
